# EUROPEAN PATENT APPLICATION

(11) **EP 4 746 373 A1**
(43) Date of publication of application: **20.05.2026**
(21) Application number: 24855205.1
(22) Date of filing: 30.01.2024
(51) Int. Cl.: H04L 61/4511

(54) **DOMAIN NAME CONFIGURATION SYSTEM**

(30) Priority: 23.08.2023 CN 202311068656; 09.11.2023 CN 202311494278
(71) Applicant: Huawei Cloud Computing Technologies Co., Ltd., Guiyang, Guizhou, 550025 (CN)
(72) Inventor: GUO, Chenxuan, Shenzhen, Guangdong 518129 (CN)
(74) Representative: Goddar, Heinz J.
(86) International application number: PCT/CN2024/074563
(87) International publication number: WO 2025/039471

(57) **Abstract**

A domain name configuration system is disclosed, and relates to the field of communication technologies. A first configuration gateway node receives domain name configuration information, and performs transmission of the domain name configuration information to H of all configuration gateway nodes included in another network cluster. In this way, rapid transmission of the domain name configuration information is implemented between network clusters, to reduce a network delay of arrival of the domain name configuration information at each network cluster, and provide a guarantee for each network cluster to receive consistent domain name configuration information. The first configuration gateway node sends the domain name configuration information to K control nodes included in a first network cluster, a first control node sends the domain name configuration information to X configuration publishing nodes included in the first network cluster, and the first configuration publishing node performs transmission of the domain name configuration information to an authoritative server. In this way, efficiency of the transmission of the domain name configuration information in the network cluster is improved, a network delay of arrival of the domain name configuration information at the authoritative server is reduced, and a guarantee is provided for the authoritative server to receive consistent domain name configuration information.

## Description

### TECHNICAL FIELD

This application relates to the field of communication technologies, and in particular, to a domain name configuration system.

### BACKGROUND

A domain name system (domain name system, DNS) may include a plurality of authoritative servers. Each authoritative server receives domain name configuration information sent by a management and control platform, and resolves a domain name (for example, www.xxxx.com.cn) to an internet protocol (Internet protocol, IP) address (for example, x.x.x.x) based on the received domain name configuration information.

When a network delay between the authoritative server and the management and control platform is high or a communication fault occurs, domain name configuration information received by a plurality of authoritative servers may be inconsistent. When the plurality of authoritative servers with inconsistent domain name configuration information receive a same domain name resolution request sent by a client, the plurality of authoritative servers resolve the domain name resolution request based on respective domain name configuration information. Consequently, the plurality of authoritative servers may obtain different resolution results for the same domain name resolution request, affecting user experience.

### SUMMARY

This application provides a domain name configuration system, to resolve a problem that user experience is affected when a plurality of authoritative servers with inconsistent domain name configuration information obtain different resolution results for a same domain name resolution request.

According to a first aspect, this application provides a domain name configuration system. The domain name configuration system includes M network clusters. Each network cluster includes N configuration gateway nodes, I control nodes, J configuration publishing nodes, and L authoritative servers, where M, N, I, J, and L are all positive integers greater than or equal to 2. A first configuration gateway node included in a first network cluster receives domain name configuration information input by a user, and sends the domain name configuration information to H configuration gateway nodes included in a domain name configuration system. The first network cluster is any one of M network clusters, the first configuration gateway node is any one of N configuration gateway nodes included in the first network cluster, and H is a positive integer greater than or equal to 1 and less than or equal to N. The first configuration gateway node further sends the domain name configuration information to K control nodes included in the first network cluster. The K control nodes are any K control nodes in I control nodes included in the first network cluster. A first control node included in the first network cluster sends the domain name configuration information to X configuration publishing nodes. The first control node is any one of the K control nodes, and the X configuration publishing nodes are any X configuration publishing nodes in the J configuration publishing nodes included in the first network cluster. A first configuration publishing node included in the first network cluster sends the domain name configuration information to an authoritative server corresponding to the first configuration publishing node. The first configuration publishing node is any one of the X configuration publishing nodes. A first authoritative server receives the domain name configuration information, and performs domain name configuration based on the correspondence between a domain name and an IP address, where the domain name configuration information includes the correspondence between a domain name and an IP address.

The first configuration gateway node receives the domain name configuration information input by the user, and performs transmission of the domain name configuration information to at least one (for example, H) of all configuration gateway nodes included in another network cluster. In this way, rapid transmission of the domain name configuration information is implemented between network clusters, to reduce time for transmission of the domain name configuration information to each network cluster, reduce a network delay of arrival of the domain name configuration information at each network cluster, and provide a guarantee for each network cluster to receive consistent domain name configuration information. The first configuration gateway node sends the domain name configuration information to a plurality of (for example, K) control nodes included in the first network cluster, the first control node sends the domain name configuration information to a plurality of (for example, X) configuration publishing nodes included in the first network cluster, and the first configuration publishing node performs transmission of the domain name configuration information to the authoritative server. In this way, efficiency of the transmission of the domain name configuration information in a single network cluster is improved, a network delay of arrival of the domain name configuration information at the authoritative server is shortened, and a guarantee is provided for each authoritative server to receive consistent domain name configuration information.

In a possible implementation, before the first configuration gateway node sends the domain name configuration information to any one of other configuration gateway nodes included in the domain name configuration system, when the first configuration gateway node is faulty, a second configuration gateway node receives the domain name configuration information input by the user. The second configuration gateway node is any configuration gateway node other than the first configuration gateway node in the domain name configuration system. The second configuration gateway node further sends the domain name configuration information to K control nodes included in a network cluster in which the second configuration gateway node is located. The K control nodes are any K control nodes in the I control nodes included in the first network cluster. The first control node included in the first network cluster sends the domain name configuration information to the X configuration publishing nodes. The first control node is any one of the K control nodes, and the X configuration publishing nodes are any X configuration publishing nodes in the J configuration publishing nodes included in the first network cluster. The first configuration publishing node included in the first network cluster sends the domain name configuration information to the authoritative server corresponding to the first configuration publishing node. The first configuration publishing node is any one of the X configuration publishing nodes. The first authoritative server receives the domain name configuration information, and performs domain name configuration based on the correspondence between a domain name and an IP address. The domain name configuration information includes the correspondence between a domain name and an IP address. In this way, when the first configuration gateway node that receives the domain name configuration information is faulty, the user may still use the domain name configuration system to perform domain name configuration. The user does not perceive that the configuration gateway node that receives the information input by the user is damaged, to improve reliability of the domain name configuration system and improve user experience.

In another possible implementation, the second configuration gateway node is any one of all configuration gateway nodes included in a network cluster other than the first network cluster in the domain name configuration system. In this way, when the first configuration gateway node that receives the domain name configuration information is faulty, a configuration gateway node in another network cluster in the domain name configuration system receives the domain name configuration information. This can avoid a delay that is needed by a configuration gateway node that receives the domain name configuration information input by the user and that is caused by a case in which a fault of the first configuration gateway node further causes a fault of another configuration gateway node included in the first network cluster.

In another possible implementation, after the first configuration gateway node sends the domain name configuration information to all the other configuration gateway nodes included in the domain name configuration system, when the first configuration gateway node is faulty, the second configuration gateway node further sends the domain name configuration information to the K control nodes included in the network cluster in which the second configuration gateway node is located. The second configuration gateway node is any configuration gateway node other than the first configuration gateway node in the domain name configuration system. The K control nodes are any K control nodes in the I control nodes included in the first network cluster. The first control node included in the first network cluster sends the domain name configuration information to the X configuration publishing nodes. The first control node is any one of the K control nodes. The X configuration publishing nodes are any X configuration publishing nodes in the J configuration publishing nodes included in the first network cluster. The first configuration publishing node included in the first network cluster sends the domain name configuration information to the authoritative server corresponding to the first configuration publishing node. The first configuration publishing node is any one of the X configuration publishing nodes. The first authoritative server receives the domain name configuration information, and performs domain name configuration based on the correspondence between a domain name and an IP address. The domain name configuration information includes the correspondence between a domain name and an IP address. In this way, a control node that does not receive the information sent by the first configuration gateway node can receive the information whose transmission is performed by the second configuration gateway node, to reduce a probability that domain name configuration information received by authoritative servers in the first network cluster is inconsistent.

In another possible implementation, the domain name configuration information further includes a second version number of the correspondence between a domain name and an IP address and a second applicable type of the correspondence between a domain name and an IP address. The first configuration publishing node stores historical domain name configuration information, and the historical domain name information includes a first version number and a first applicable type. That the first configuration publishing node included in the first network cluster receives the domain name configuration information sent by the first control node includes: The first configuration publishing node compares whether the first applicable type matches the second applicable type. When the first applicable type matches the second applicable type, the first configuration publishing node determines whether the second version number is an update compared with the first version number. When the second version number is an update, the first configuration publishing node receives the domain name configuration information. In this way, a guarantee is provided for the configuration publishing node to receive domain name configuration information with a latest version number. In this way, a guarantee is provided for the configuration publishing node to send the domain name configuration information with the latest version number to the authoritative server, to avoid a problem that the domain name configuration information is inconsistent because the authoritative server cannot receive the domain name configuration information with the latest version number.

In another possible implementation, each network cluster further includes W health detection nodes. W is a positive integer greater than or equal to 2. The correspondence between a domain name and an IP address is as follows: One domain name corresponds to one target address set. The target address set includes one or more IP addresses. The first configuration gateway node further sends the domain name configuration information to the W health detection nodes included in the first network cluster. A first health detection node included in the first network cluster resolves the domain name configuration information to obtain a communication status of the one or more IP addresses included in the target address set, and sends the communication status of the one or more IP addresses to the first control node. The first control node sends the domain name configuration information to the X configuration publishing nodes. The first configuration publishing node sends the domain name configuration information to the first authoritative server corresponding to the first configuration publishing node. When the first authoritative server receives a request that is for resolving the domain name and that is sent by a client, the first authoritative server obtains, based on the communication status of the one or more IP addresses corresponding to the domain name, one or more IP addresses whose communication status meets a condition, and sends, to the client, the one or more IP addresses whose communication status meets the condition. In this way, the health detection node obtains a communication status corresponding to each IP address, and the communication status corresponding to each IP address is sent to the authoritative server via the control node and the configuration publishing node. When the authoritative server needs to resolve the domain name, an IP address with an optimal communication status may be selected as a resolution result, to improve communication quality and user experience.

In another possible implementation, the M×N configuration gateway nodes included in the domain name configuration system are located in a first network. The N configuration gateway nodes, the I control nodes, the J configuration publishing nodes, and the W health detection nodes included in each network cluster are all located in a second network, and network environments of the first network and the second network are different. In this way, all the configuration gateway nodes included in the domain name configuration system are located in a same network (for example, the first network), so that a network delay of transmission of the domain name configuration information between the network clusters included in the domain name configuration system can be shortened, transmission efficiency is improved, and a probability of domain name configuration information inconsistency caused by a high network delay between the network clusters is reduced. Various nodes included in a single network cluster are located in a same network, so that a network delay of transmission of the domain name configuration information inside the network cluster can be shortened, transmission efficiency can be improved, and a probability of domain name configuration information inconsistency caused by a high network delay inside the network cluster is reduced.

In another possible implementation, the domain name configuration information further includes an identifier of a network cluster, where the identifier indicates a network cluster in which the domain name configuration information takes effect. In this way, when the domain name resolution request is received, an authoritative server that has a shortest transmission distance to a client that initiates the domain name resolution request is used, based on the identifier of the network cluster, to resolve the domain name resolution request, to improve resolution efficiency.

According to a second aspect, this application provides a domain name configuration method. The method is performed by a domain name configuration system, and the domain name configuration system includes M network clusters. Each network cluster includes: N configuration gateway nodes, I control nodes, J configuration publishing nodes, and L authoritative servers. M, N, I, J, and L are all positive integers greater than or equal to 2. The method includes: A first configuration gateway node included in a first network cluster receives domain name configuration information input by a user, sends the domain name configuration information to H configuration gateway nodes included in the domain name configuration system, and sends the domain name configuration information to K control nodes included in the first network cluster. The first network cluster is any one of the M network clusters, the first configuration gateway node is any one of the N configuration gateway nodes included in the first network cluster, and H is a positive integer greater than or equal to 1 and less than or equal to N. The K control nodes are any K control nodes in the I control nodes included in the first network cluster. A first control node included in the first network cluster sends the domain name configuration information to X configuration publishing nodes. The first control node is any one of the K control nodes, and the X configuration publishing nodes are any X configuration publishing nodes in the J configuration publishing nodes included in the first network cluster. A first configuration publishing node included in the first network cluster sends the domain name configuration information to an authoritative server corresponding to the first configuration publishing node. The first configuration publishing node is any one of the X configuration publishing nodes. A first authoritative server receives the domain name configuration information, and performs domain name configuration based on a correspondence between a domain name and an IP address, where the domain name configuration information includes the correspondence between a domain name and an IP address.

According to a third aspect, this application provides a domain name configuration apparatus. The domain name configuration apparatus is used in a domain name configuration system, and the domain name configuration system includes M network clusters. Each network cluster includes: N configuration gateway nodes, I control nodes, J configuration publishing nodes, and L authoritative servers. M, N, I, J, and L are all positive integers greater than or equal to 2. The domain name configuration apparatus includes: a transceiver module used in a first configuration gateway node included in a first network cluster, configured to receive domain name configuration information input by a user, and send the domain name configuration information to H configuration gateway nodes included in the domain name configuration system; and send the domain name configuration information to K control nodes included in the first network cluster. The first network cluster is any one of the M network clusters, the first configuration gateway node is any one of the N configuration gateway nodes included in the first network cluster, H is a positive integer greater than or equal to 1 and less than or equal to N, and the K control nodes are any K control nodes in the I control nodes included in the first network cluster. The transceiver module is further used in a first control node included in the first network cluster, and is configured to send the domain name configuration information to X configuration publishing nodes. The first control node is any one of the K control nodes, and the X configuration publishing nodes are any X configuration publishing nodes in the J configuration publishing nodes included in the first network cluster. The transceiver module is further used in a first configuration publishing node included in the first network cluster, and is configured to send the domain name configuration information to an authoritative server corresponding to the first configuration publishing node. The first configuration publishing node is any one of the X configuration publishing nodes. A first authoritative server receives the domain name configuration information, and performs domain name configuration based on a correspondence between a domain name and an IP address, where the domain name configuration information includes the correspondence between a domain name and an IP address.

According to a fourth aspect, this application provides a processor. The processor is configured to implement a function implemented by using the domain name configuration method in any one of the second aspect or the possible designs of the second aspect.

According to a fifth aspect, this application provides a computing device cluster. The computing device cluster includes at least one computing device, and each computing device includes a processor and a memory. The processor of the at least one computing device is configured to execute instructions stored in the memory of the at least one computing device, so that the computing device cluster performs a function implemented by using the domain name configuration method in any one of the second aspect or the possible designs of the second aspect.

According to a sixth aspect, this application provides a computer-readable storage medium, including computer program instructions, where when the computer program instructions are run on a computing device cluster, the computing device cluster is caused to perform a function implemented by the domain name configuration method in any one of the second aspect or the possible designs of the second aspect.

According to a seventh aspect, this application provides a computer program product. When the computer program product runs on the computing device cluster, the computing device cluster is caused to perform a function implemented by the domain name configuration method in any one of the second aspect or the possible designs of the second aspect.

For beneficial effects of the second aspect to the seventh aspect, refer to the descriptions of any one of the first aspect or the implementations of the first aspect. Details are not described herein again. In this application, based on the implementations in the foregoing aspects, the implementations may be further combined to provide more implementations.

### BRIEF DESCRIPTION OF DRAWINGS

FIG. 1 is a diagram of a structure of a first domain name configuration system;
FIG. 2 is a diagram of a structure of a second domain name configuration system;
FIG. 3 is a diagram of a first domain name configuration system according to this application;
FIG. 4 is a diagram of receiving information by a configuration gateway node according to this application;
FIG. 5 is a first diagram of connection between configuration gateway nodes according to this application;
FIG. 6 is a diagram of a structure of a communication model according to this application;
FIG. 7 is a second diagram of connection between configuration gateway nodes according to this application;
FIG. 8 is a first schematic flowchart of determining a configuration gateway node according to this application;
FIG. 9 is a second schematic flowchart of determining a configuration gateway node according to this application;
FIG. 10 is a first diagram of information transmission between configuration gateway nodes in a network cluster according to this application;
FIG. 11 is a second diagram of information transmission between configuration gateway nodes in a network cluster according to this application;
FIG. 12 is a first diagram of information transmission between a configuration gateway node and a control node according to this application;
FIG. 13 is a second diagram of information transmission between a configuration gateway node and a control node according to this application;
FIG. 14 is a first diagram of information transmission between a control node and a configuration publishing node according to this application;
FIG. 15 is a second diagram of information transmission between a control node and a configuration publishing node according to this application;
FIG. 16A is a diagram of a structure of a first network cluster according to this application;
FIG. 16B is a diagram of a structure of a second network cluster according to this application;
FIG. 17 is a schematic flowchart of a domain name configuration method according to this application;
FIG. 18 is a diagram of a structure of a second domain name configuration system according to this application;
FIG. 19 is a diagram of a structure of a third domain name configuration system according to this application;
FIG. 20 is a diagram of a structure of a domain name configuration apparatus according to this application;
FIG. 21 is a diagram of a structure of a computing device according to this application;
FIG. 22 is a diagram of a structure of a computing device cluster according to this application; and
FIG. 23 is a diagram of a possible connection manner of a computing device cluster according to this application.

### DESCRIPTION OF EMBODIMENTS

A domain name resolution and domain name system (domain name system, DNS) may include a plurality of authoritative servers. Each authoritative server receives domain name configuration information sent by a management and control platform, and resolves a domain name (for example, www.xxxx.com.cn) to an internet protocol (Internet protocol, IP) address (for example, x.x.x.x) based on the received domain name configuration information. The management and control platform can be an application (application, app) that implements a domain name configuration function. The application may be, but is not limited to being installed on processing devices such as a mobile phone, a tablet computer, a handheld computer, a personal computer (personal computer, PC), a server, a cellular phone, a personal digital assistant (personal digital assistant, PDA), a wearable device (for example, a smartwatch), a smart home device (for example, a television), a vehicle-mounted computer, a game console, and an augmented reality (augmented reality, AR)\virtual reality (virtual reality, VR) device. A specific device form of the processing device on which the management and control platform is installed is not specially limited in embodiments of this application. For example, the management and control platform may be installed on a tablet computer, or may be installed on a mobile phone. In this application, the domain name configuration information is also referred to as information.

The processing device may configure the information to the authoritative server in a plurality of manners. The following provides three manners of configuring information that are usually used by the processing device.

### Manner ①

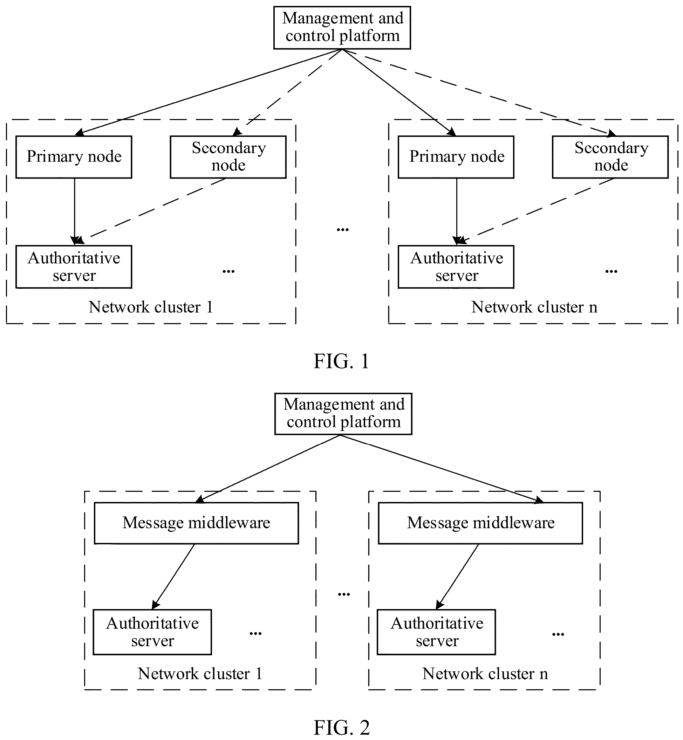

FIG. 1 is a diagram of a structure of a first domain name configuration system. As shown in FIG. 1, the domain name configuration system includes a network cluster 1 to a network cluster n. Each network cluster includes a primary node, a secondary node, and an authoritative server to be configured with information.

A process in which the network cluster 1 included in the domain name configuration system configures information is used as an example to describe a process in which the domain name configuration system configures the information to the authoritative server included in the domain name configuration system. The process is specifically as follows: A primary node of the network cluster 1 receives information whose transmission is performed by the management and control platform, and performs transmission of the information to a secondary node of the network cluster 1 and an authoritative server of the network cluster 1.

When the primary node of the network cluster 1 receives information 1 whose transmission is performed by the management and control platform, and the transmission of the information 1 is not performed to a secondary node of the network cluster 1 and an authoritative server of the network cluster 1, the primary node of the network cluster 1 is faulty. In this case, the management and control platform starts a next information transmission process, and performs transmission of information 2 to the secondary node of the network cluster 1, and the secondary node of the network cluster 1 performs transmission of the information 2 to the authoritative server of the network cluster 1. In the foregoing process, the authoritative server of the network cluster 1 does not receive the information 1, an authoritative server included in another network cluster that works normally in the domain name configuration system receives the information 1, and consequently, information received by the authoritative servers included in the domain name configuration system is inconsistent.

### Manner ②

A structure of the domain name configuration system in this manner is the same as the structure of the domain name configuration system in Manner ①, and a difference lies in a process in which the network cluster included in the domain name configuration system configures information.

A process in which the network cluster 1 included in the domain name configuration system configures information is still used as an example to describe a process in which the domain name configuration system configures the information to the authoritative server included in the domain name configuration system. The process is specifically as follows: A primary node and a secondary node of the network cluster 1 receive information whose transmission is performed by the management and control platform, and when both the primary node and the secondary node of the network cluster 1 successfully receive the information, the primary node of the network cluster 1 performs transmission of the information to an authoritative server of the network cluster 1. When at least one of the primary node and the secondary node of the network cluster 1 fails to receive the information, the primary node of the network cluster 1 does not perform transmission the information to the authoritative server of the network cluster 1.

In the foregoing process, an authoritative server included in a network cluster in which at least one of a primary node and a secondary node is faulty cannot receive information, an authoritative server in a network cluster in which both a primary node and a secondary node work normally in the domain name configuration system can receive information, and consequently, information received by the authoritative servers included in the domain name configuration system is inconsistent.

### Manner ③

FIG. 2 is a diagram of a structure of a second domain name configuration system. As shown in FIG. 2, the domain name configuration system includes a network cluster 1 to a network cluster n. Each network cluster includes a message middleware and an authoritative server to be configured with information.

A process in which the network cluster 1 included in the domain name configuration system configures information is still used as an example to describe a process in which the domain name configuration system configures the information to the authoritative server included in the domain name configuration system. The process is specifically as follows: A message middleware of the network cluster 1 receives information whose transmission is performed by the management and control platform, and performs transmission of the information to an authoritative server of the network cluster 1.

In the foregoing process, an authoritative server in a network cluster whose message middleware is faulty cannot receive the information, an authoritative server included in a network cluster whose message middleware works normally can receive the information, and consequently information received by the authoritative servers included in the domain name configuration system is inconsistent.

Manner ① to Manner ③ described above may cause information received by the authoritative servers included in the domain name configuration system to be inconsistent. When the plurality of authoritative servers with inconsistent domain name configuration information receive a same domain name resolution request sent by a client, the plurality of authoritative servers resolve the domain name resolution request based on respective information. Consequently, the plurality of authoritative servers may obtain different resolution results for the same domain name resolution request, affecting user experience.

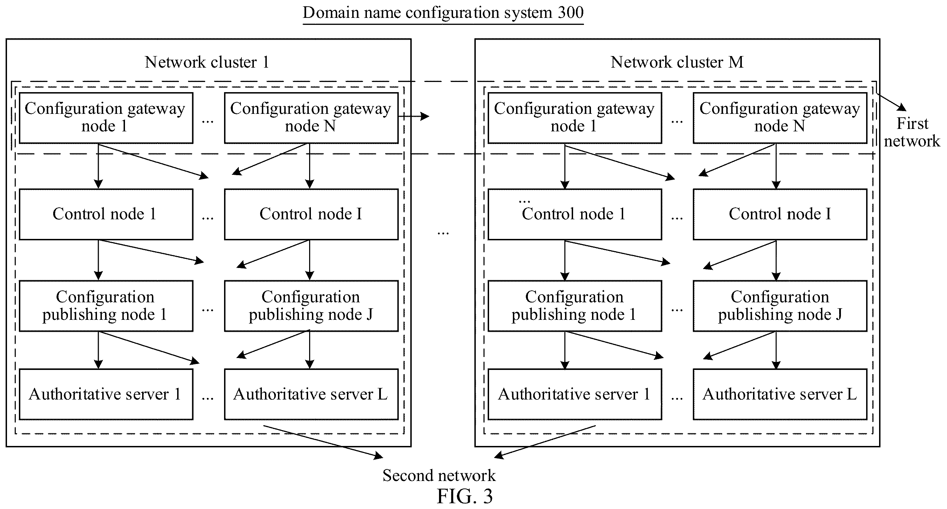

Therefore, this application provides a domain name configuration system. FIG. 3 is a diagram of a first domain name configuration system according to this application. As shown in FIG. 3, a domain name configuration system 300 includes a network cluster 1 to a network cluster M, where M is a positive integer greater than or equal to 2. The network cluster 1 to the network cluster M included in the domain name configuration system 300 may have different deployment manners. The following describes the manners separately.

In a first possible case, the network cluster 1 to the network cluster M included in the domain name configuration system 300 are deployed at a same geographical location.

For example, the network cluster 1 to the network cluster M included in the domain name configuration system 300 are all deployed at a geographical location 1, as shown in Table 1.

**Table 1**

| Sequence number | Network cluster name | Deployment geographical location |
|---|---|---|
| 1 | Network cluster 1 to network cluster 3 | Geographical location 1 |

In a second possible case, the network cluster 1 to the network cluster M included in the domain name configuration system 300 are deployed at different geographical locations.

In this case, one network cluster 310 may be deployed at a same geographical location, or a plurality of network clusters 310 may be deployed at a same geographical location. An example in which M is equal to 3 is used to describe a deployment status of a network cluster 1 to a network cluster 3 included in the domain name configuration system 300. As shown in Table 2, the network cluster 1 and the network cluster 2 are deployed at a geographical location 1, and the network cluster 3 is deployed at a location 2.

**Table 2**

| Sequence number | Network cluster name | Deployment geographical location |
|---|---|---|
| 1 | Network cluster 1 and network cluster 2 | Geographical location 1 |
| 2 | Network cluster 3 | Geographical location 2 |

Based on an actual application requirement, the domain name configuration system 300 may include four or more network clusters, deploy the four or more network clusters to three or more geographical locations, and deploy one or more network clusters at each geographical location. This is not limited in this application.

Based on the actual application requirement, a geographical location may be further divided into a plurality of areas, and one or more network clusters may be deployed in each area. For example, the geographical location 1 is divided into an area 1 to an area n, the network cluster 1 is deployed in the area 1, and the network cluster 2 and the network cluster 3 are deployed in the area 2. In some possible cases, an area may be further divided into a plurality of parts, and one or more network clusters may be deployed in each part. For example, the area 2 is divided into a part 1 and a part 2, the network cluster 2 is deployed in the part 1, and the network cluster 3 is deployed in the part 2. Based on the actual application requirement, different deployment manners of the network cluster may be selected. This is not limited in this application.

Still refer to FIG. 3. Each network cluster may include N configuration gateway nodes, I control nodes, J configuration publishing nodes, and L authoritative servers, where N, I, J, and L are all positive integers greater than or equal to 2.

In a possible case, a configuration gateway node included in each network cluster in the domain name configuration system is located in a first network. In this way, a network delay of information transmission between network clusters included in the domain name configuration system is shortened, transmission efficiency is improved, and a probability of information inconsistency caused by a high network delay between the network clusters is reduced.

The information may include domain name information and geographical location information. The domain name information includes: a correspondence (value) between one or more domain names and a first target address set, a version number (version) of the correspondence, and an applicable type (key) of the correspondence. The geographical location information includes a correspondence (value) between one or more geographical locations and a second target address set, a version number (version) of the correspondence, and an applicable type (key) of the correspondence. The applicable type (key) indicates whether the information is the domain name information (dns/cfg), the geographical location information (dimp/geomapdb-intranet), or the like. The first target address set may include one or more IP addresses. The second target address set may include one or more IP address segments.

An example in which the domain name information includes correspondences between a plurality of domain names and the first target address set is used. Information 1 is the domain name information, and the information 1 includes a correspondence 1, a version number 1, and the domain name information. The correspondence 1 includes a correspondence between a domain name 1 and a target address set 11 to a correspondence between a domain name i and a target address set 1i, where i is a positive integer greater than or equal to 2. Table 3 shows correspondences between two domain names and the first target address set. As shown in Table 3, rows corresponding to a sequence number 1 to a sequence number 4 in Table 3 show that domain name information whose version number is 100 includes a correspondence between a domain name 1 and ip1 and ip2, and a correspondence between a domain name 2 and ip3 and ip4.

An example in which the geographical location information includes correspondences between a plurality of geographical locations and the second target address set is used. Information 2 is the geographical location information, and the information 2 includes a correspondence 2, a version number 2, and the geographical location information. The correspondence 2 includes a correspondence between a geographical location 1 and a target address set 21 to a correspondence between a geographical location j and a target address set 2j, where j is a positive integer greater than or equal to 2. Table 3 shows correspondences between two geographical locations and the second target address set. As shown in Table 3, rows corresponding to a sequence number 5 and a sequence number 6 in Table 3 show that geographical location information whose version number is 30 includes a correspondence between a geographical location 1 and an IP address segment 1, and a correspondence between a geographical location 2 and an IP address segment 2.

**Table 3**

| Sequence number | Correspondence (value) | | Version number (version) | Applicable type (key) |
|---|---|---|---|---|
| 1 | Domain name 1 (www.xxx.com.cn) | ip1 (x.x.x.x) | 100 | Domain name information |
| 2 | Domain name 1 (www.xxx.com.cn) | ip2 (x.x.) | | |
| 3 | Domain name 2 (www.xxy.com.cn) | ip3 (x.x.x.x) | | |
| 4 | Domain name 2 (www.xxy.com.cn) | ip4 (x.x.x.y) | | |
| 5 | Geographical location 1 | IP address segment 1 (z.z.z.x1) to (z.z.z.y1) | 30 | Geographical location information |
| 6 | Geographical location 2 | IP address segment 2 (z.z.z.x2) to (z.z.z.y2) | | |

For example, the configuration gateway node verifies information that is input by a user and that is shown in Table 3, and determines that content of rows corresponding to the sequence number 1 and the sequence number 3 to the sequence number 6 meets a DNS structure, and verification succeeds. The configuration gateway node encapsulates the information that passes the verification into a packet format whose transmission can be performed in a P2P network, and performs transmission of the encapsulated information to the control node. For the packet format whose transmission can be performed in the P2P network, refer to descriptions of a common technology. Details are not described herein.

In some possible cases, the information input by the user may further include a network cluster identifier (namespace) that indicates a network cluster in which the domain name configuration information takes effect. For example, the domain name configuration system includes a network cluster 1 to a network cluster M. As shown in a last column in Table 4, the information input by the user includes the network cluster identifier (namespace). A last column of rows corresponding to a sequence number 1 to a sequence number 3 in Table 4 indicates that a correspondence between a domain name 1 and ip1, and a correspondence between a domain name 2 and ip3 and ip4 take effect in a network cluster 1.

**Table 4**

| Sequence number | Correspondence (value) | | Version number (version) | Applicable type (key) | Network cluster identifier (namespace) |
|---|---|---|---|---|---|
| 1 | Domain name 1 (www.xxx.com.cn) | ip1 (x.x.x.x) | 100 | Domain name information | Network cluster 1 |
| 2 | Domain name 2 (www.xxy.com.cn) | ip3 (x.x.x.x) | | | |
| 3 | Domain name 2 (www.xxy.com.cn) | ip4 (x.x.x.y) | | | |
| 4 | Geographical location 1 | IP address segment 1 (z.z.z.x1) to (z.z.z.y1) | 30 | Geographical location information | Network cluster 1 to network cluster M |
| 5 | Geographical location 2 | IP address segment 2 (z.z.z.x2) to (z.z.z.y2) | | | |

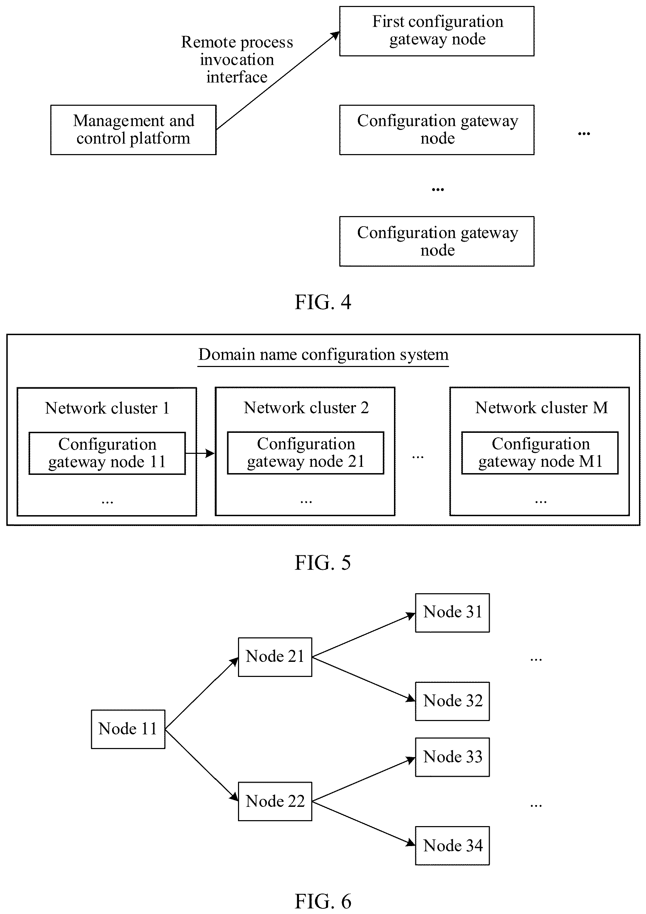

FIG. 4 is a diagram of receiving information by a configuration gateway node according to this application. As shown in FIG. 4, a management and control platform receives information input by a user, and invokes a remote invocation interface of the configuration gateway node to send the information to a first configuration gateway node included in a first network cluster, and the first configuration gateway receives the information input by the user. The first configuration gateway node sends the information to H of all configuration gateway nodes included in another network cluster. H is a positive integer greater than or equal to 1 and less than or equal to N. The first configuration gateway node is one of N gateway nodes included in the first network cluster. In this way, rapid transmission of the information is implemented between network clusters, to reduce time for transmission of the information to each network cluster, reduce a network delay of arrival of the information at each network cluster, and provide a guarantee for each network cluster to receive consistent information.

Based on the foregoing embodiments, the following describes, with reference to the accompanying drawings, a domain name configuration method provided in this application as an example. The domain name configuration method provided in this embodiment of this application includes a process of information transmission between different network clusters and a process of information transmission between nodes inside a network cluster. The following separately describes the following two processes.

### 1. Process of information transmission between different network clusters.

Manners of information transmission between network clusters varies with different values of H, which are separately described below.

Case 1: Transmission of information is performed between network clusters in a one-to-one manner (that is, H is equal to 1).

A first configuration gateway node of a first network cluster receives information input by a user, determines a second configuration gateway node in a second network cluster from all configuration gateway nodes included in a network cluster other than the first network cluster included in the domain name configuration system, and performs transmission of the information to the second configuration gateway node. The second configuration gateway node receives the information, and determines a third configuration gateway node in a third network cluster from all configuration gateway nodes included in a network cluster other than the first network cluster and the second network cluster included in the domain name configuration system. The foregoing process is repeated until all network clusters included in the domain name configuration system receive the information.

For example, FIG. 5 is a first diagram of connection between configuration gateway nodes according to this application. As shown in FIG. 5, a domain name configuration system includes a network cluster 1 to a network cluster M, and each network cluster includes N configuration gateway nodes. A network cluster i includes a configuration gateway node i1 to a configuration gateway node iN, where i is equal to a positive integer from 1 to M. A configuration gateway node 11 in the network cluster 1 receives the information input by the user, and the configuration gateway node 11 determines a configuration gateway node 21 from all configuration gateway nodes included in the network cluster 2 to the network cluster M, and performs transmission of the information to the configuration gateway node 21. The foregoing process is repeated until the transmission of the information is performed to all the network clusters included in the domain name configuration system.

The configuration gateway node may determine, in a manner described below, whether to receive the information.

Case a: The information is domain name information.

The information further includes a second version number of a correspondence between a domain name and an IP address and a second applicable type of the correspondence between a domain name and an IP address. The first configuration publishing node stores historical domain name configuration information, and the historical domain name information includes a first version number and a first applicable type. That the first configuration publishing node included in the first network cluster receives domain name configuration information sent by a first control node includes: The first configuration publishing node compares whether the first applicable type matches the second applicable type. When the first applicable type matches the second applicable type, the first configuration publishing node determines whether the second version number is an update compared with the first version number. When the second version number is an update, the first configuration publishing node receives the domain name configuration information. Both the first applicable type and the second applicable type indicate the domain name information.

The foregoing describes a case in which the first configuration gateway node receives the information by using an example in which the first applicable type matches the second applicable type (for example, both indicate the domain name information). In some possible examples, the first applicable type does not match the second applicable type (for example, the first applicable type indicates the domain name information, and the second applicable type indicates geographical location information). In this case, the first configuration gateway node directly receives the information. In some other possible cases, the first applicable type matches the second applicable type, and the second version number is not an update compared with the first version number. In this case, the first configuration gateway node does not receive the information.

A manner in which the first configuration gateway node determines whether the second version number is an update compared with the first version number varies with different representation forms of the version number. The following provides several possible examples.

Example 1: The version number is represented by a value. For example, the first version number is 30, and the second version number is 32. In this case, the first configuration gateway node compares a value (that is, 30) representing the first version number with a value (that is, 32) representing the second version number. When the value representing the second version number is greater than the value representing the first version number, the first configuration gateway node determines that the second version number is an update compared with the first version number; or when the value representing the second version number is not greater than the value representing the first version number, the second version number is not an update.

Example 2: The version number is represented by using a symbol. For example, the first version number is v1.0, and the second version number is v1.1. In this case, the first configuration gateway node compares a value of a last bit of a symbol (that is, v1.0) representing the first version number with a value of a last bit of a symbol (that is, v1.1) representing the second version number. When the value of the last bit of the symbol representing the second version number is greater than that of the last bit of the symbol representing the first version number, the first configuration gateway node determines that the second version number is an update compared with the first version number; or when the value of the last bit of the symbol representing the second version number is not greater than that of the last bit of the symbol representing the first version number, the second version number is not an update.

The foregoing provides two examples of determining whether the version number is updated. During actual application, the version number may be represented in another manner, and a method that is for determining whether the version number is updated and that corresponds to a representation manner of the version number may be defined. This is not limited in this application.

Case b: The information is geographical location information.

The information further includes a fourth version number of a correspondence between a geographical location and an IP address and a fourth applicable type of the correspondence between a geographical location and an IP address. The first configuration publishing node stores historical domain name configuration information, and the historical domain name information includes a third version number and a third applicable type. That the first configuration publishing node included in the first network cluster receives domain name configuration information sent by a first control node includes: The first configuration publishing node compares whether the third applicable type matches the fourth applicable type. When the third applicable type matches the fourth applicable type, the first configuration publishing node determines whether the fourth version number is an update compared with the third version number. When the fourth version number is an update, the first configuration publishing node receives the domain name configuration information. Both the third applicable type and the fourth applicable type indicate the geographical location information. In this case, the first configuration gateway node may determine, by using the method described in Case a, whether the version number is updated. Details are not described herein again.

Case 2: Transmission of information is performed between network clusters in a one-to-many manner (that is, H is greater than 1).

An example in which the transmission of the information is performed in a one-to-two manner (that is, H is equal to 2) between network clusters is used. In this case, a communication model shown in FIG. 6 may be formed. FIG. 6 is a diagram of a structure of a communication model according to this application. As shown in FIG. 6, a node 11 sends information to a node 21 and a node 22, the node 21 sends the information to a node 31 and a node 32, and the node 22 sends the information to a node 33 and a node 34.

An example in which the transmission of the information is performed between network clusters by using the communication model shown in FIG. 6 is used to describe a process of information transmission between network clusters.

A first configuration gateway node of the first network cluster receives information input by a user, determines a second configuration gateway node in a second network cluster and a third configuration gateway node in a third network cluster from all configuration gateway nodes included in a network cluster other than the first network cluster included in the domain name configuration system, and performs transmission of the information to the second configuration gateway node and the third configuration gateway node. The second configuration gateway node and the third configuration gateway node receive the information, and determine a fourth configuration gateway node in a fourth network cluster and a fifth configuration gateway node in a fifth network cluster from all configuration gateway nodes included in a network cluster other than the first network cluster, the second network cluster, and the third network cluster included in the domain name configuration system. The foregoing process is repeated until all network clusters included in the domain name configuration system receive the information.

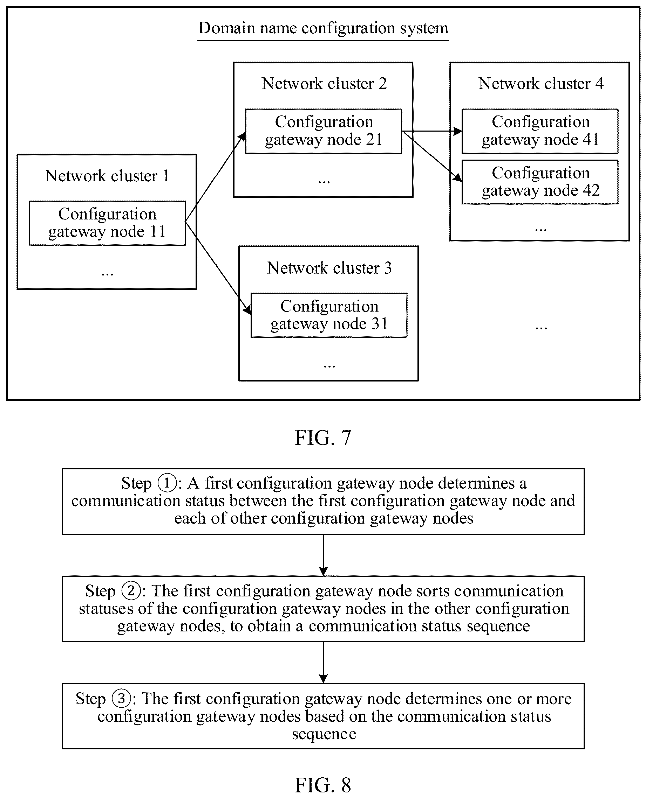

For example, FIG. 7 is a second diagram of connection between configuration gateway nodes according to this application. As shown in FIG. 7, a domain name configuration system includes a network cluster 1 to a network cluster M, and each network cluster includes N configuration gateway nodes. A network cluster i includes a configuration gateway node i1 to a configuration gateway node iN, where i is equal to a positive integer from 1 to M. A configuration gateway node 11 in the network cluster 1 receives the information input by the user, and the configuration gateway node 11 determines a configuration gateway node 21 in the network cluster 2 and a configuration gateway node 31 in the network cluster 3 from all configuration gateway nodes included in the network cluster 2 to the network cluster M, and performs transmission of the information to the configuration gateway node 21 and the configuration gateway node 31 separately. The configuration gateway node 21 determines a configuration gateway node 41 and a configuration gateway node 42 in the network cluster 4 from all configuration gateway nodes included in the network cluster 3 to the network cluster M, and sends the information to the configuration gateway node 41 and the configuration gateway node 42. The foregoing process is repeated until all the network clusters included in the domain name configuration system receive the information.

In this case, a process in which a configuration gateway node receives information is the same as a process in which a configuration gateway node receives information described in Case 1. For related descriptions, refer to the foregoing descriptions. Details are not described herein again.

In Case 2, an example in which H is equal to 2 is used to describe the process of information transmission between network clusters. Based on an actual application requirement, the transmission of the information may be performed between the network clusters in a one-to-three or one-to-more-than-three manner. In both Case 1 and Case 2, an example in which the network cluster 1 to the network cluster M each include a same quantity N of configuration gateway nodes is used to describe a manner of transmission of the domain name configuration information between the network clusters. Based on an actual application requirement, quantities of configuration gateway nodes included in the network cluster 1 to the network cluster M may alternatively be different. This is not limited in this application.

The first configuration gateway node may determine one or more configuration gateway nodes from other configuration gateway nodes in a plurality of manners. The following provides two examples of determining the configuration gateway node.

Example A: The first configuration gateway node determines one or more configuration gateway nodes based on a communication status between the first configuration gateway node and each of other configuration gateway nodes. FIG. 8 is a first schematic flowchart of determining a configuration gateway node according to this application. As shown in FIG. 8, the process may include the following step ① to step ③.

Step ①: The first configuration gateway node determines the communication status between the first configuration gateway node and each of the other configuration gateway nodes. The first configuration gateway node may determine a communication status between the first configuration gateway node and another configuration gateway node in different manners, such as a network delay and a network bandwidth.

For example, the domain name configuration system includes a configuration gateway node 1 to a configuration gateway node n. The configuration gateway node 1 separately performs transmission of same data to the configuration gateway node 2 to the configuration gateway node n, obtains network delays of receiving the data by the configuration gateway node 2 to the configuration gateway node n, and determines, by using the network delays, a communication status between the configuration gateway node 1 and each of the configuration gateway node 2 to the configuration gateway node n.

For another example, the domain name configuration system includes a configuration gateway node 1 to a configuration gateway node n. The configuration gateway node 1 obtains a network bandwidth between the configuration gateway node 1 and each of the configuration gateway node 2 to the configuration gateway node n, and determines, by using the network bandwidth, a communication status between the configuration gateway node 1 and each of the configuration gateway node 2 to the configuration gateway node n.

Step ②: The first configuration gateway node sorts communication statuses of the configuration gateway nodes in the other configuration gateway nodes, to obtain a communication status sequence.

For example, the first configuration gateway node sorts the other configuration gateway nodes in ascending order of network delays, to obtain a network delay sequence (that is, a communication status sequence) of the other configuration gateway nodes.

For another example, the first configuration gateway node sorts the other configuration gateway nodes in descending order of network bandwidths, to obtain a network bandwidth sequence (that is, a communication status sequence) of the other configuration gateway nodes.

Step ③: The first configuration gateway node determines one or more configuration gateway nodes based on the communication status sequence. For example, the first configuration gateway node determines one or more configuration gateway nodes that rank top in the communication status sequence (for example, a network delay sequence or a network bandwidth sequence).

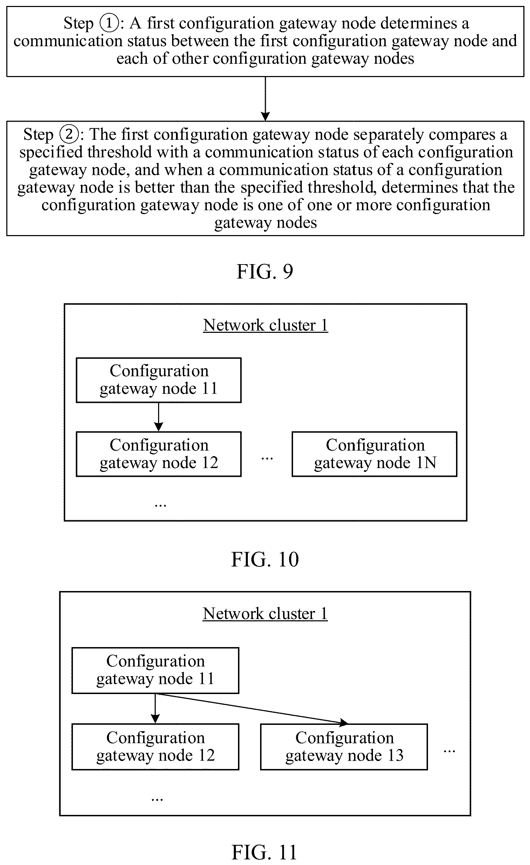

Example B: The first configuration gateway node determines one or more configuration gateway nodes based on a relationship between a specified threshold and a communication status between the first configuration gateway node and each of other configuration gateway nodes. FIG. 9 is a second schematic flowchart of determining a configuration gateway node according to this application. As shown in FIG. 9, the process may include the following step ① and step ②.

In this example, step ① is the same as step ① in Example A, but step ② is different. Specifically, step ② is described as follows: The first configuration gateway node separately compares the specified threshold with a communication status of each configuration gateway node, and when a communication status of a configuration gateway node is better than the specified threshold, determines that the configuration gateway node is one of the one or more configuration gateway nodes.

Example C: The first configuration gateway node randomly determines one or more configuration gateway nodes from other configuration gateway nodes.

In the foregoing Cases 1 and Case 2, with reference to the accompanying drawings, a process of information transmission in the domain name configuration system when the first configuration gateway node that receives the information input by the user works normally is described. In some possible cases, the first configuration gateway node that receives the information input by the user is faulty, or all configuration gateway nodes included in the first network cluster in which the first configuration gateway node that receives the information input by the user is located are faulty. A fault may be caused by power-off, that the management and control platform cannot run normally, that a medium for information transmission cannot work normally, or the like. A reason for the fault is not limited in this application.

The process of transmission of information input by the user to the domain name configuration system varies with different faulty configuration gateway nodes. The following separately describes the processes.

Case A: Before the first configuration gateway node sends the domain name configuration information to any one of the other configuration gateway nodes included in the domain name configuration system, the first configuration gateway node is faulty.

In this case, the second configuration gateway node receives the domain name configuration information input by the user. The second configuration gateway node is any configuration gateway node other than the first configuration gateway node in the domain name configuration system. In this way, when the first configuration gateway node that receives the domain name configuration information is faulty, the user may still use the domain name configuration system to perform domain name configuration. The user does not perceive that the configuration gateway node that receives the information input by the user is damaged, to improve reliability of the domain name configuration system and improve user experience.

The second configuration gateway node may be any one of all configuration gateway nodes included in a network cluster other than the first network cluster in the domain name configuration system. The management and control platform may determine the second configuration gateway node by using any method provided in Example A to Example C. This is not limited in this application. In this way, when the first configuration gateway node that receives the domain name configuration information is faulty, a configuration gateway node in another network cluster in the domain name configuration system receives the domain name configuration information. This can avoid a delay that is needed by a configuration gateway node that receives the domain name configuration information input by the user and that is caused by a case in which a fault of the first configuration gateway node further causes a fault of another configuration gateway node included in the first network cluster. For example, the domain name configuration system includes a network cluster 1 to a network cluster M. A network cluster i includes a configuration gateway node i1 to a configuration gateway node iN, where i is a positive integer from 1 to M. A configuration gateway node 11 receives information input by a user, and sends a fault before sending the information to a configuration gateway node other than the configuration gateway node 11 included in the domain name configuration system. In this case, all configuration gateway nodes (for example, a configuration gateway node 21) included in the domain name configuration system other than a configuration gateway node 12 to the configuration gateway node 1N may receive the information input by the user.

The second configuration gateway node may be any one of configuration gateway nodes included in the first network cluster other than the first configuration gateway node. The management and control platform may determine the second configuration gateway node by using any method provided in Example A to Example C. This is not limited in this application. For example, the domain name configuration system includes a network cluster 1 to a network cluster M. A network cluster i includes a configuration gateway node i1 to a configuration gateway node iN, where i is a positive integer from 1 to M. A configuration gateway node 11 receives information input by a user, and sends a fault before sending the information to a configuration gateway node other than the configuration gateway node 11 included in the domain name configuration system. In this case, a configuration gateway node 12 to the configuration gateway node 1N (for example, the configuration gateway node 12) included in the domain name configuration system may all receive the information input by the user.

Case B: After the first configuration gateway node sends the domain name configuration information to all the other configuration gateway nodes included in the domain name configuration system, the first configuration gateway node is faulty.

In this case, the management and control platform may perform transmission of the information to the domain name configuration system by using the method described in Case A. For related descriptions, refer to the foregoing descriptions. Details are not described herein again.

When any one of all configuration gateway nodes included in the first network cluster recovers to normal work, the configuration gateway node that recovers to work receives the information sent by another configuration gateway node. For example, a configuration gateway node 11 in a network cluster 1 recovers to work, and the configuration gateway node 11 receives information sent by a configuration gateway node 21.

The foregoing describes, with reference to the accompanying drawings, a process of implementing information transmission between network clusters included in the domain name configuration system by using a configuration gateway node. The following describes, with reference to the accompanying drawings, a process of information transmission inside a network cluster. A process in which a configuration gateway node, a control node, a configuration publishing node, an authoritative server, and a health detection node inside the network cluster receive information is the same as the process in which a configuration gateway node receives information described in Case 1. For related descriptions, refer to the foregoing descriptions. Details are not described herein again. The following describes only a process in which how various nodes send information to a next node.

In a possible case, the configuration gateway node, the control node, and the configuration publishing node included in the network cluster are located in a second network. The first network is different from the second network. In this way, a network delay of information transmission inside the network cluster is shortened, transmission efficiency is improved, and a probability of domain name configuration information inconsistency caused by a high network delay inside the network cluster is reduced.

### 2. The process of information transmission between the nodes inside the network cluster.

The process of information transmission in the network cluster may include: information transmission between configuration gateway nodes in the network cluster, information transmission between a configuration gateway node and a control node, information transmission between a control node and a configuration publishing node, and information transmission between a configuration publishing node and an authoritative server.

The following uses a network cluster 1 as an example to describe the foregoing transmission process separately.

### ①. A process of information transmission between a configuration gateway node 11 and a configuration gateway node 1N included in the network cluster 1

A first configuration gateway node sends domain name configuration information to G of other configuration gateway nodes included in a first network cluster. G is a positive integer less than or equal to N-1. A process of information transmission between configuration gateway nodes included in the network cluster varies with different values of G, and is separately described below.

In a first possible case, the configuration gateway node 11 receives information input by a user, and sends the information to one or more of the configuration gateway node 12 to the configuration gateway node 1N (that is, G is equal to 1).

The configuration gateway node 11 sends the information to one of the configuration gateway node 12 to the configuration gateway node 1N, and the configuration gateway node that receives the information sends the information to another configuration gateway node until each of the configuration gateway node 11 to the configuration gateway node 1N receives the information. FIG. 10 is a first diagram of information transmission between configuration gateway nodes in a network cluster according to this application. As shown in FIG. 10, the configuration gateway node 11 sends information to the configuration gateway node 12 in the configuration gateway node 12 to the configuration gateway node 1N. The configuration gateway node 12 sends the information to the configuration gateway node 13 in the configuration gateway node 13 to the configuration gateway node 1N. The process is repeated until all configuration gateway nodes included in the network cluster 1 receive the information. The configuration gateway node may use the method provided in Example A to Example C, to determine a target configuration gateway node from other configuration gateway nodes included in the network cluster 1 as an object for sending the information. The target configuration gateway node may be a configuration gateway node with an optimal communication status, or may be any randomly determined configuration gateway node.

In a second possible case, the configuration gateway node 11 receives information input by a user, and sends the information to a plurality of configuration gateway nodes in the configuration gateway node 12 to the configuration gateway node 1N (that is, G is greater than or equal to 2).

For example, G is equal to 2. The configuration gateway node 11 sends the information to two of the configuration gateway node 12 to the configuration gateway node 1N. FIG. 11 is a second diagram of information transmission between configuration gateway nodes in a network cluster according to this application. As shown in FIG. 11, the configuration gateway node 11 sends information to the configuration gateway node 12 and the configuration gateway node 13 in the configuration gateway node 12 to the configuration gateway node 1N. The configuration gateway node 12 sends the information to the configuration gateway node 13 and the configuration gateway node 14 in the configuration gateway node 13 to the configuration gateway node 1N. The process is repeated until all configuration gateway nodes included in the network cluster 1 receive the information. The configuration gateway node may use the method provided in Example A to Example C, to determine two target configuration gateway nodes from other configuration gateway nodes as objects for sending the information. The two target configuration gateway nodes may be randomly determined, or may be determined based on a communication status, or may be determined both based on a communication status and randomly (for example, the configuration gateway node 13 is determined based on a communication status, and the configuration gateway node 14 is randomly determined). This is not limited in this application.

When G is greater than or equal to 3, the configuration gateway node 11 may determine, by using a method in which G is equal to 2, three or more target configuration gateway nodes in the configuration gateway node 12 to the configuration gateway node 1N as objects for sending the information. Details are not described herein again.

### ②. A process of information transmission between a configuration gateway node and a control node included in the network cluster 1

A first configuration gateway node sends domain name configuration information to K control nodes in a first network cluster, where K is a positive integer less than or equal to I. A process of information transmission between the configuration gateway node and the control node varies with different values of K, and is separately described below.

In a first possible case, the first configuration gateway node sends the information to one of I control nodes included in the first network cluster (that is, K is equal to 1).

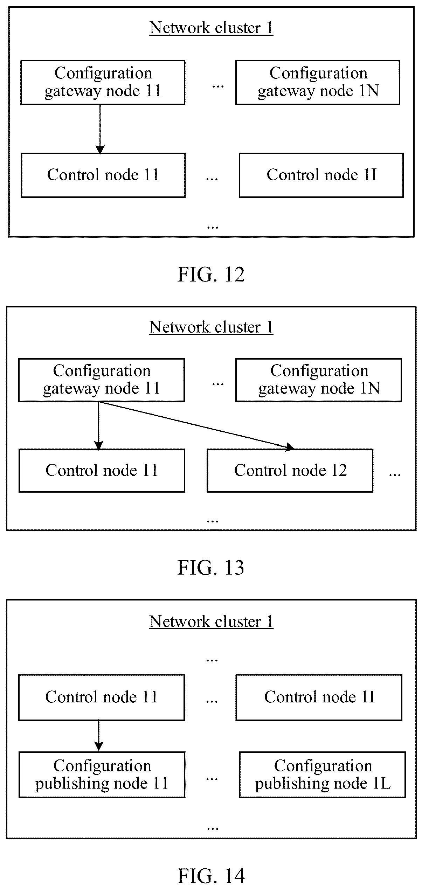

FIG. 12 is a first diagram of information transmission between a configuration gateway node and a control node according to this application. As shown in FIG. 12, a configuration gateway node 11 sends information to a control node 11 in the control node 11 to a control node 1I. The control node 12 to the control node 1I that do not receive the information receive information sent by a configuration gateway node 12 to a configuration gateway node 1N. For example, the control node 12 receives the information sent by the configuration gateway node 12. The configuration gateway node may use the method provided in Example A to Example C, to determine a target control node from the control node 11 to the control node 1I as an object for sending the information.

In a second possible case, the first configuration gateway node sends the information to two of I control nodes included in the first network cluster (that is, K is equal to 2).

FIG. 13 is a second diagram of information transmission between a configuration gateway node and a control node according to this application. As shown in FIG. 13, a configuration gateway node 11 sends information to a control node 11 and a control node 12 in the control node 11 to a control node 1I. The control node 13 to the control node 1I that do not receive the information receive information sent by a configuration gateway node 12 to a configuration gateway node 1N. For example, the control node 13 and the control node 14 receive the information sent by the configuration gateway node 12. The configuration gateway node may use the method provided in Example A to Example C, to determine two target control nodes from the control node 11 to the control node 1I as objects for sending the information.

When K is greater than or equal to 3, the configuration gateway node may determine, by using a method in which K is equal to 2, three or more target control nodes in the control node 11 to the control node 1I as objects for sending the information. Details are not described herein again.

### ③. A process of information transmission between a control node and a configuration gateway node included in the network cluster 1

A first control node sends domain name configuration information to X configuration publishing nodes included in a first network cluster. The first control node indicates one of K control nodes. X is a positive integer less than or equal to J. A process of information transmission between the control node and the configuration gateway node varies with different values of X, and is separately described below.

In a first possible case, the first control node sends the information to one of L configuration publishing nodes included in the first network cluster (that is, X is equal to 1).

FIG. 14 is a first diagram of information transmission between a control node and a configuration publishing node according to this application. As shown in FIG. 14, a control node 11 sends information to a configuration publishing node 11 in the configuration publishing node 11 to a configuration publishing node 1L. A configuration publishing node 12 to the configuration publishing node 1L that do not receive the information receive information sent by a control node 12 to a control node 1I. For example, the configuration publishing node 12 receives the information sent by the control node 12. The control node may use the method provided in Example A to Example C to determine a target configuration publishing node from the configuration publishing node 11 to the configuration publishing node 1L as an object for sending the information.

In a second possible case, the first control node sends the information to two of L configuration publishing nodes included in the first network cluster (that is, X is equal to 2).

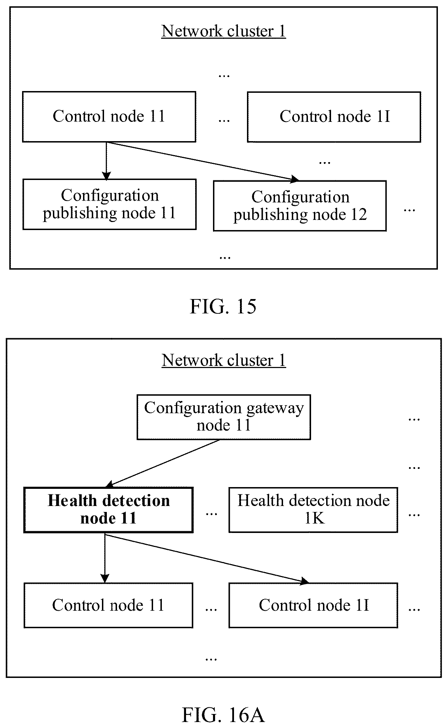

FIG. 15 is a second diagram of information transmission between a control node and a configuration publishing node according to this application. As shown in FIG. 15, a control node 11 sends information to a configuration publishing node 11 and a configuration publishing node 12 in the configuration publishing node 11 to a configuration publishing node 1L. A configuration publishing node 13 to the configuration publishing node 1L that do not receive the information receive information sent by a control node 12 to a control node 1I. For example, the configuration publishing node 13 and the configuration publishing node 14 receives the information sent by the control node 12. The control node may use the method provided in Example A to Example C to determine two target configuration publishing nodes from the configuration publishing node 11 to the configuration publishing node 1L as objects for sending the information.

When X is greater than or equal to 3, the control node may determine, by using a method in which X is equal to 2, three or more target configuration publishing nodes in the configuration publishing node 11 to the configuration publishing node 1L as objects for sending the information. Details are not described herein again.

### ④. A process of information transmission between a configuration publishing node and an authoritative server included in the network cluster 1

A first configuration publishing node receives domain name configuration information, parses the domain name configuration information to obtain a correspondence between a domain name and an IP address, and sends the correspondence between a domain name and an IP address to a first authoritative server included in a first network cluster. The first configuration publishing node is one of X configuration publishing nodes. The first authoritative server receives the correspondence between a domain name and an IP address, and performs domain name configuration based on the correspondence between a domain name and an IP address.

For example, the network cluster 1 includes a configuration publishing node 11 and an authoritative server 1. The configuration publishing node 11 and the authoritative server 1 are deployed on a same processing device. When the configuration publishing node 11 receives information shown in Table 5, the configuration publishing node 11 performs transmission of the information to the authoritative server 1. When the authoritative server 1 receives a resolution request for a domain name 1, the authoritative server 1 obtains ip1 or ip2 as a resolution result based on a correspondence between the domain name 1 and ip1 and ip2 shown in information 1 in Table 5, and performs transmission of the resolution result to a client.

**Table 5**

| Domain name | Domain name content | ip | ip content |
|---|---|---|---|
| Domain name 1 | www.xxx.com.cn | ip1 | x.x.x.x |
| | | ip2 | y.y.y.y |

In a possible example, the authoritative server 1 is deployed at a geographical location 1, and an authoritative server 2 is deployed at a geographical location 2. A client at the geographical location 1 initiates a domain name resolution request for the domain name 1. In this case, the authoritative server 1 receives the domain name resolution request, and the authoritative server 1 determines, based on received geographical location information, an IP address segment 1 corresponding to the geographical location 1. The authoritative server 1 determines, from a plurality of IP addresses based on a correspondence between a domain name and the plurality of IP addresses, that an IP address in the IP address segment 1 is a resolution result of the domain name, and sends the IP address to the client.

The foregoing provides a case in which the configuration publishing node and the authoritative server that are included in the network cluster are deployed on a same processing device in a one-to-one manner. In some possible cases, the configuration publishing node and the authoritative server may alternatively be deployed on a same processing device in a one-to-many manner. For example, a network cluster 1 includes a configuration publishing node 1, and an authoritative server 1 to an authoritative server n. The configuration publishing node 1 and the authoritative server 1 to the authoritative server n are deployed on a same electronic device. When the configuration publishing node 1 receives the information 1 shown in Table 5, the configuration publishing node 1 performs transmission of the information 1 to the authoritative server 1 to the authoritative server n.

In some possible cases, the network cluster may further include K health detection nodes, where K is a positive integer greater than or equal to 2. The correspondence between a domain name and an IP address is as follows: One domain name corresponds to one first target address set, and the first target address set includes one or more IP addresses. A first configuration gateway node sends the domain name configuration information to a first health detection node, where the first health detection node is one of the K health detection nodes. The first health detection node receives the domain name configuration information, parses the domain name configuration information to obtain a communication status of the one or more IP addresses included in the first target address set, and sends the communication status of the one or more IP addresses to a first control node. In this way, the control node may perform transmission of the communication status corresponding to each IP address to the authoritative server via the configuration publishing node. When the authoritative server needs to resolve the domain name, an IP address with an optimal communication status may be selected as the resolution result, to improve communication quality and user experience. In this case, the health detection node is located in a second network.

FIG. 16A is a diagram of a structure of a first network cluster according to this application. As shown in FIG. 16A, the network cluster further includes a health detection node 11 to a health detection node 1K. A configuration gateway node 11 is configured to send information to one of the health detection node 11 to the health detection node 1K (for example, the health detection node 11). Each health detection node that receives the information parses the information to obtain a communication status of each IP address included in the first target address set corresponding to the domain name in the information, and sends the information to one of a control node 11 to a control node 1I (for example, the control node 11).

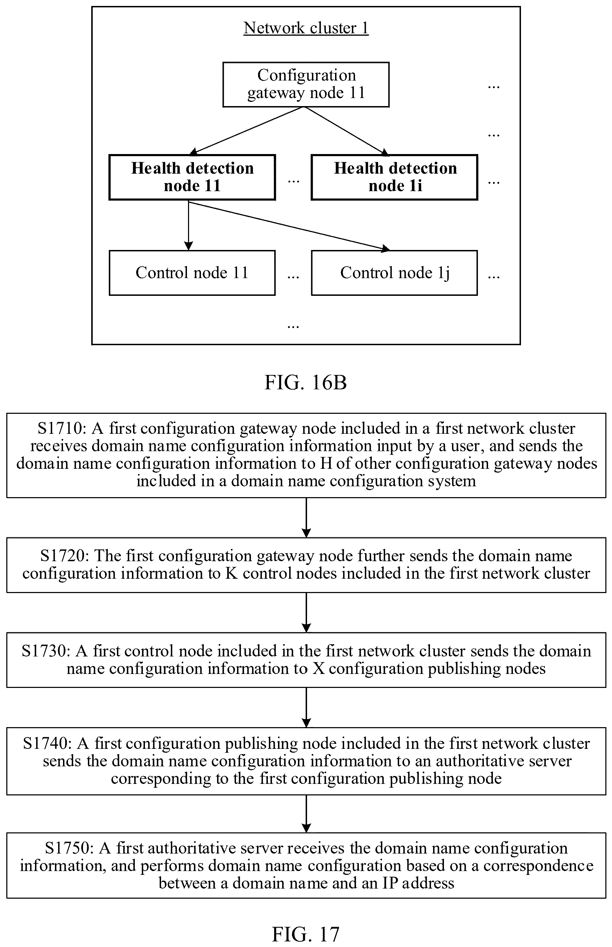

In some possible cases, FIG. 16B is a diagram of a structure of a second network cluster according to this application. As shown in FIG. 16B, a configuration gateway node 11 sends information to a plurality of health detection nodes (for example, the health detection node 11 to a health detection node 1i) in the health detection node 11 to a health detection node 1K. This process is consistent with the foregoing described process of sending information to one health detection node. Details are not described herein again.

In the foregoing descriptions, an example in which the network clusters in the domain name configuration system each include a same quantity of configuration gateway nodes, control nodes, configuration publishing nodes, authoritative servers, and health detection nodes is used to describe a process in which the domain name configuration system performs information configuration. During actual application, quantities of various nodes included in the network clusters may be the same or may be different. For example, a network cluster 1 includes N configuration gateway nodes, and a network cluster 2 includes N+1 configuration gateway nodes. The foregoing describes a process of information transmission in a domain name configuration system with reference to the accompanying drawings. Based on the domain name configuration system provided in FIG. 3 to FIG. 16B, this application further provides a possible specific example of a domain name configuration method. FIG. 17 is a schematic flowchart of a domain name configuration method according to this application. For descriptions of the domain name configuration system, refer to the foregoing descriptions of FIG. 3 to FIG. 16B. Details are not described herein again. The domain name configuration method provided in this embodiment includes the following step S1710 to step S1750.

S1710: A first configuration gateway node included in a first network cluster receives domain name configuration information input by a user, and sends the domain name configuration information to H of other configuration gateway nodes included in a domain name configuration system.

The first network cluster is any one of M network clusters, the first configuration gateway node is any one of N configuration gateway nodes included in the first network cluster, and H is a positive integer greater than or equal to 1 and less than or equal to N.

S1720: The first configuration gateway node further sends the domain name configuration information to K control nodes included in the first network cluster.

The K control nodes are any K control nodes in I control nodes included in the first network cluster.

S1730: A first control node included in the first network cluster sends the domain name configuration information to X configuration publishing nodes.

The first control node is any one of the K control nodes, and the X configuration publishing nodes are any X configuration publishing nodes in J configuration publishing nodes included in the first network cluster.

S 1740: A first configuration publishing node included in the first network cluster sends the domain name configuration information to an authoritative server corresponding to the first configuration publishing node.

The first configuration publishing node is any one of the X configuration publishing nodes.

S 1750: A first authoritative server receives the domain name configuration information, and performs domain name configuration based on a correspondence between a domain name and an IP address.

The domain name configuration information includes the correspondence between a domain name and an IP address.

Rapid transmission of the domain name configuration information is implemented between network clusters, to reduce time for transmission of the domain name configuration information between the network clusters, reduce a network delay of arrival of the domain name configuration information at each network cluster, and provide a guarantee for each network cluster to receive consistent domain name configuration information. The first configuration gateway node sends the domain name configuration information to a plurality of (for example, K) control nodes included in a first network cluster, the first control node sends the domain name configuration information to a plurality of (for example, X) configuration publishing nodes included in the first network cluster, and the first configuration publishing node performs transmission of the domain name configuration information to the authoritative server. In this way, efficiency of the transmission of the domain name configuration information in a single network cluster is improved, a network delay of arrival of the domain name configuration information at the authoritative server is shortened, and a guarantee is provided for each authoritative server to receive consistent domain name configuration information. For more related content of the domain name configuration method, refer to the foregoing related descriptions of the domain name configuration system. Details are not described herein again.

It should be noted that, the domain name configuration system in the foregoing embodiment may be further configured to implement possible sub-steps of the steps included in the domain name configuration method in the embodiment. For content of these sub-steps, refer to the implementation of the foregoing domain name configuration system. Details are not described herein again.

Based on the foregoing descriptions of the domain name configuration system and the domain name configuration method provided in this application, the following uses an example in which the domain name configuration system includes two network clusters, each network cluster includes two configuration gateway nodes, two control nodes, two configuration publishing nodes, and two authoritative servers, and various nodes included in the domain name configuration system perform transmission of information 1 and information 2 in a one-to-two manner to describe a complete process in which the domain name configuration system configures information to an authoritative server.

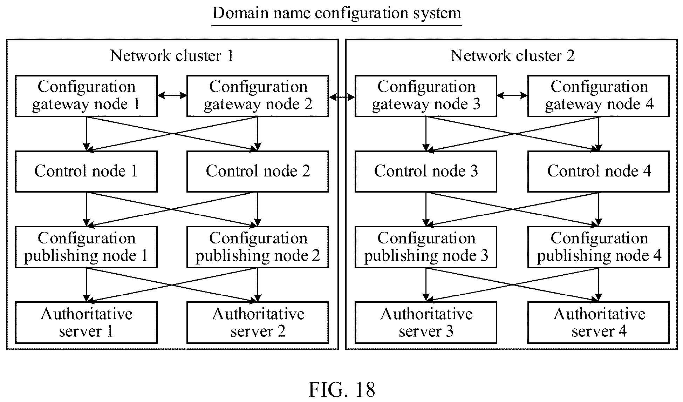

FIG. 18 is a diagram of a structure of a second domain name configuration system according to this application. As shown in FIG. 18, the domain name configuration system includes a network cluster 1 and a network cluster 2. The network cluster 1 includes: a configuration gateway node 1 and a configuration gateway node 2, a control node 1 and a control node 2, a configuration publishing node 1 and a configuration publishing node 2, and an authoritative server 1 and an authoritative server 2. The network cluster 2 includes: a configuration gateway node 3 and a configuration gateway node 4, a control node 3 and a control node 4, a configuration publishing node 3 and a configuration publishing node 4, and an authoritative server 3 and an authoritative server 4. Content of information 1 and information 2 is shown in Table 6.

**Table 6**

| Sequence number | Information name | Correspondence (value) | | Version number (version) | Applicable type (key) | Network cluster identifier (namespace) |
|---|---|---|---|---|---|---|
| 1 | Information 1 | Domain name 1 (www.xxx.com.cn) | ip1 (x.x.x.x) | 100 | Domain name information | Network cluster 1 |
| 2 | | Domain name 2 (www.xxy.com.cn) | ip3 (x.x.x.x) | | | |
| 3 | | Domain name 2 (www.xxy.com.cn) | ip4 (x.x.x.y) | | | |
| 4 | Information 2 | Geographical location 1 | IP address segment 1 (z.z.z.x1) to (z.z.z.y1) | 30 | Geographical location information | Network cluster 1 to network cluster M |
| 5 | | Geographical location 2 | IP address segment 2 (z.z.z.x2) to (z.z.z.y2) | | | |

The following uses an example in which the domain name configuration system configures information 1 shown in FIG. 18 to describe a process in which the domain name configuration system configures information. The process includes the following step ① and step ②.

Step ①: Transmission of information 1 whose version number is 100 is performed between network clusters included in the domain name configuration system. The process includes the following ① to ③.
①: The configuration gateway node 1 performs transmission of the information 1 whose version number is 100 to the configuration gateway node 2 and the configuration gateway node 3, and the configuration gateway node 2 and the configuration gateway node 3 receive the information 1 whose version number is 100.
②: The configuration gateway node 2 performs transmission of the information 1 whose version number is 100 to the configuration gateway node 3 and the configuration gateway node 4.

For the configuration gateway node 3: The configuration gateway node 3 compares an applicable type (key) and a version number (version) included in the information 1, and when the applicable types are the same and the version number is not updated, determines that information received by the configuration gateway node 3 (for example, the information 1 whose version number is 100 that is sent by the configuration gateway node 1 to the configuration gateway node 3) and the information 1 whose version number is 100 and whose transmission is performed by the configuration gateway node 2 are the same information. In this case, the configuration gateway node 3 no longer receives the information 1 whose version number is 100 and whose transmission is performed by the configuration gateway node 2.

For the configuration gateway node 4: The configuration gateway node 4 compares applicable types (keys) and version numbers (versions) of the received information and the information 1, and when at least one of applicable types being different or the version number being not updated is true, determines that the configuration gateway node 4 does not receive the information 1 whose version number is 100. In this case, the configuration gateway node 4 receives the information 1 whose version number is 100, and uses the information 1 whose version number is 100 to overwrite information 1 with another version number that is received by the configuration gateway node 4.

③: The configuration gateway node 3 performs transmission of the information 1 whose version number is 100 to the configuration gateway node 4.

For the configuration gateway node 4: The configuration gateway node 4 compares applicable types (keys) and version numbers (versions) of the information (for example, the information 1 whose version number is 100 that is sent by the configuration gateway node 2 to the configuration gateway node 4 in ②) received by the configuration gateway node 4 and the information 1 whose version number is 100 that is sent by the configuration gateway node 3, and when the applicable types are the same and the version number is not updated, determines that the information received by the configuration gateway node 4 is the same as the information 1 whose version number is 100 that is sent by the configuration gateway node 3. In this case, the configuration gateway node 4 no longer receives the information 1 whose version number is 100 and whose transmission is performed by the configuration gateway node 3.

When the configuration gateway node 1 is faulty, a management and control platform determines one configuration gateway node (for example, the configuration gateway node 2) from the configuration gateway node 2 to the configuration gateway node 4, and sends the information 1 whose version number is 100 to the configuration gateway node. The management and control platform may determine one configuration gateway node from the configuration gateway node 2 to the configuration gateway node 4 by using any method described in Example A to Example C.

When both of the configuration gateway node 1 and the configuration gateway node 2 are faulty, the management and control platform determines one configuration gateway node (for example, the configuration gateway node 3) from the configuration gateway node 3 and the configuration gateway node 4, and sends the information 1 whose version number is 100 to the configuration gateway node. The management and control platform may determine one configuration gateway node from the configuration gateway node 3 and the configuration gateway node 4 by using any method described in Example A to Example C.

Step ②: Transmission of information 1 whose version number is 100 is performed inside the network cluster. The process includes the following ① to ③.
①: The transmission of the information 1 whose version number is 100 is performed between a configuration gateway node and a control node.

The configuration gateway node 1 performs transmission of the information 1 whose version number is 100 to the control node 1 and the control node 2, and the control node 1 and the control node 2 receive the information 1 whose version number is 100.

The configuration gateway node 2 performs transmission of the information 1 whose version number is 100 to the control node 1 and the control node 2. The control node 1 compares applicable types (keys) and version numbers (versions) of information (for example, the information 1 whose version number is 100 and whose transmission is performed by the configuration gateway node 1 to the control node 1) received by the control node 1 and the information 1 whose version number is 100 and whose transmission is performed by the configuration gateway node 2 to the control node 1, and when the applicable types are the same and the version number is not updated, determines that the control node 1 receives the information 1 whose version number is 100. In this case, the control node 1 no longer receives the information 1 whose version number is 100 that is sent by the configuration gateway node 2. A process in which the control node 2 receives the information 1 whose version number is 100 is the same as that of the control node 1. Details are not described herein again.

When the configuration gateway node 1 is faulty, the configuration gateway node 2 sends the information 1 whose version number is 100 to the control node 1 and the control node 2. This process is the same as the process described above. Details are not described herein again. When both the configuration gateway node 1 and the configuration gateway node 2 are faulty, the control node 1 and the control node 2 wait until at least one of the configuration gateway node 1 and the configuration gateway node 2 recovers to work. When at least one of the configuration gateway node 1 and the configuration gateway node 2 recovers to work, the configuration gateway node that recovers to work receives the information 1 whose version number is 100 that is sent by at least one configuration gateway in the network cluster 2, and performs transmission of the information 1 whose version number is 100 to the control node 1 and the control node 2.

When at least one of the control node 1 and the control node 2 is faulty, a faulty control node waits until the faulty control node recovers to work. After the faulty control node recovers to work, the control node receives the information 1 whose version number is 100 that is sent by at least one of the configuration gateway node 1 and the configuration gateway node 2.

②: The transmission of the information 1 whose version number is 100 is performed between a control node and a configuration publishing node.

The control node 1 performs transmission of the information 1 whose version number is 100 to the configuration publishing node 1 and the configuration publishing node 2, and the configuration publishing node 1 and the configuration publishing node 2 receive the information 1 whose version number is 100.

The control node 2 performs transmission of the information 1 whose version number is 100 to the configuration publishing node 1 and the configuration publishing node 2. The configuration publishing node 1 compares applicable types (keys) and version numbers (versions) of information (for example, the information 1 whose transmission is performed by the control node 1 to the configuration publishing node 1) received by the configuration publishing node 1 and the information 1 whose version number is 100 and whose transmission is performed by the control node 2 to the configuration publishing node 1, and when the applicable types are the same and the version number is not updated, determines that the configuration publishing node 1 receives the information 1 whose version number is 100. In this case, the control node 1 no longer receives the information 1 whose version number is 100 that is sent by the control node 2. A process in which the configuration publishing node 2 to receive the information 1 whose version number is 100 is the same as a process in which the configuration publishing node 1 receives the information 1 whose version number is 100. Details are not described herein again.

When one of the control node 1 or the control node 2 is faulty, a control node that works normally sends the information 1 whose version number is 100 to the configuration publishing node 1 and the configuration publishing node 2. This process is the same as the process described above. Details are not described herein again. When both of the control node 1 and the control node 2 are faulty, the configuration publishing node 1 and the configuration publishing node 2 wait until at least one of the control node 1 and the control node 2 recovers to work. The at least one control node that recovers to work sends the information 1 whose version number is 100 to the configuration publishing node 1 and the configuration publishing node 2. This process is the same as the process described above. Details are not described herein again.

③: The transmission of the information 1 whose version number is 100 is performed between a configuration publishing node and an authoritative server.

The configuration publishing node 1 performs transmission of the information 1 whose version number is 100 to the authoritative server 1, and the configuration publishing node 2 performs transmission of the information 1 whose version number is 100 to the authoritative server 2.

When the configuration publishing node 1 is faulty, the authoritative server 1 cannot receive the information 1 whose version number is 100 within time when the configuration publishing node 1 is faulty. In this case, the authoritative server 1 waits until the configuration publishing node 1 recovers to work normally. After the configuration publishing node 1 recovers to work normally, the authoritative server 1 receives the information 1 whose version number is 100 and whose transmission is performed by the control node, and the configuration publishing node 1 performs transmission of the information 1 whose version number is 100 to the authoritative server 1. A process in which the configuration publishing node 2 performs transmission of the information 1 whose version number is 100 to the authoritative server 2 is the same as a process in which the configuration publishing node 1 performs transmission of the information 1 whose version number is 100 to the authoritative server 1. Details are not described herein again.

The foregoing uses an example in which the domain name configuration system includes two network clusters, and each network cluster includes two configuration gateway nodes, two control nodes, two configuration publishing nodes, and two authoritative servers to describe a process in which the domain name configuration system completes configuration of the information 1. When the domain name configuration system includes more than two network clusters, and each network cluster includes more than two configuration gateway nodes, control nodes, configuration publishing nodes, and authoritative servers, information configuration may still be implemented in the manner described above.

During actual application, when the domain name configuration system implements information configuration, various nodes included in the network cluster may perform information transmission in a one-to-one manner described above, or may perform information transmission in a one-to-many (one-to-two described in FIG. 18) manner. Whether to perform information transmission in one-to-one or one-to-many manner is not limited in this application.

The foregoing uses an example in which the information 1 whose version number is 100 to describe a process in which the domain name configuration system configures the information. In some possible examples, the domain name configuration system may further implement configuration of geographical location information (for example, information 2) by using the method of configuring the information 1 described above. For related descriptions, refer to the foregoing descriptions. Details are not described herein again. An example in which the information 2 includes a correspondence between a geographical location 1 and an IP address segment 1, and a correspondence between a geographical location 2 and an IP address segment 2 is used. Based on an actual application requirement, the information 2 may further include another correspondence, for example, a correspondence between the geographical location 2 and another IP address segment 3, and one geographical location may alternatively correspond to a plurality of IP address segments. This is not limited in this application.

The network cluster 1 and the network cluster 2 included in the domain name configuration system shown in FIG. 18 may be deployed at different geographical locations. For example, the network cluster 1 is deployed at the location 1, and the network cluster 2 is deployed at the location 2. Various nodes included in the network cluster 1 are located in a network 21, and various nodes included in the network cluster 2 are located in a network 22. When a client at the location 1 initiates a domain name resolution request, the authoritative server in the network cluster 1 receives the domain name resolution request and sends a resolution result to the client. In this way, both of the network cluster 1 and the client are located at the location 1. Compared with that the network cluster 2 located at the location 2 receives the domain name resolution request and sends a resolution result to the client, this reduces a network delay of transmission of the domain name request and the domain name resolution result, and improves domain name resolution efficiency. The location 1 and the location 2 may be a city, a province, or a district, or may be geographical locations that are obtained in another division manner, that are located in different longitudes and dimensions, and that have a same area or different areas.

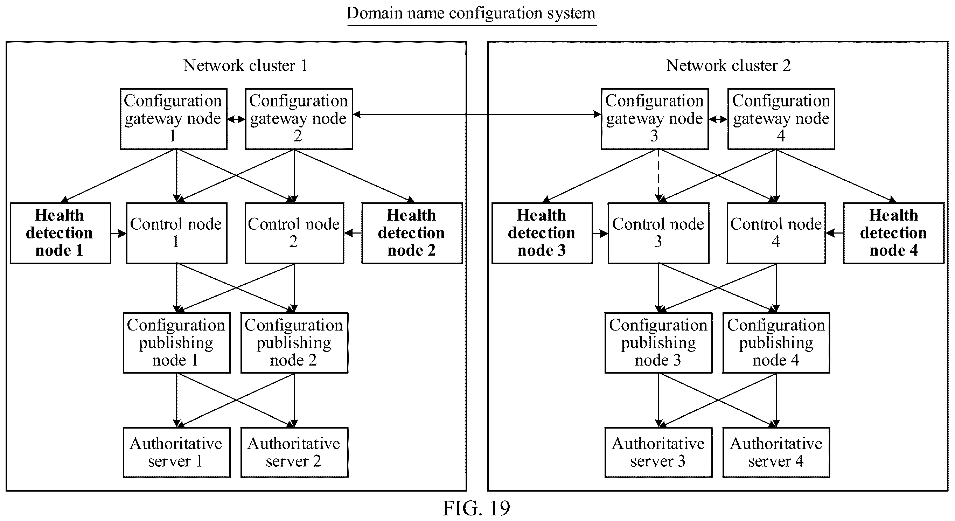

In some possible cases, the domain name configuration system may further include a health detection node. The following uses the domain name configuration system shown in FIG. 19 as an example. FIG. 19 is a diagram of a third domain name configuration system according to this application. A difference between the domain name configuration system shown in FIG. 19 and the domain name configuration system shown in FIG. 18 lies in that the domain name configuration system shown in FIG. 19 includes a health detection node 1 and a health detection node 2. The health detection node 1 is separately connected to a configuration gateway node 1 and a control node 1, and the health detection node 2 is separately connected to a configuration gateway node 2 and a control node 2.

An example in which the domain name configuration system configures information 1 shown in FIG. 19 is still used to describe a process in which the domain name configuration system including the health detection node configures information. The process in which a configuration gateway node, a control node, a configuration publishing node, and an authoritative server in the domain name configuration system including the health detection node configures domain name configuration information is the same as that of the configuration gateway node, the control node, the configuration publishing node, and the authoritative server of the domain name configuration system shown in FIG. 18. Details are not described herein again. The following specifically describes a process in which the health detection node configures information.

The health detection node 1 receives information 1 whose version number is 100 and whose transmission is performed by the configuration gateway node 1, and parses the information 1 whose version number is 100, to obtain a communication status of each IP address corresponding to a domain name 1 included in the information 1 whose version number is 100. The health detection node 1 performs transmission of the communication status of each IP address to the control node 1. The control node 1 performs transmission of the communication status of each IP address to the authoritative server 1 and the authoritative server 2 in the manner described above. When the authoritative server 1 receives a resolution request that is for the domain name 1 and that is sent by a client, the authoritative server 1 determines an IP address with an optimal communication status in the plurality of IP addresses as a resolution result of the domain name 1. A process of transmission of the information 1 whose version number is 100 on the health detection node 2 is the same as a process of transmission of the information 1 whose version number is 100 on the health detection node 1. Details are not described herein again.

When the health detection node 1 is faulty, the domain name configuration system shown in FIG. 19 completes configuration of the information 1 whose version number is 100 by using the method of configuring the information 1 whose version number is 100 in the domain name configuration system shown in FIG. 18. When the authoritative server 1 receives the resolution request that is for the domain name 1 and that is sent by the client, the authoritative server 1 determines an IP address with any communication status in the plurality of IP addresses as the resolution result of the domain name 1.

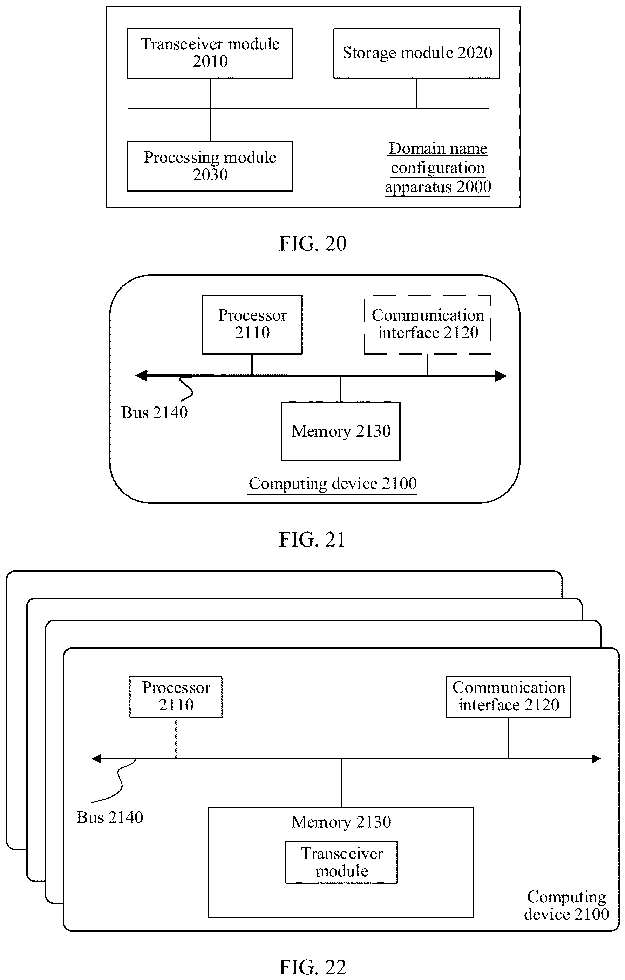

The domain name configuration system provided in this application is described above with reference to FIG. 3 to FIG. 19. The domain name configuration system provided in this application may be implemented by using hardware or a combination of hardware and computer software. Whether a node or a node implementing a function or some functions is performed by hardware or hardware driven by computer software depends on a specific application scenario and a design constraint condition of the domain name configuration system. The following describes a domain name configuration apparatus provided in this application with reference to FIG. 20. FIG. 20 is a diagram of a structure of the domain name configuration apparatus according to this application. The domain name configuration apparatus is used in a domain name configuration system. The domain name configuration system includes M network clusters, and each network cluster includes N configuration gateway nodes, I control nodes, J configuration publishing nodes, and L authoritative servers, where M, N, I, J, and L are all positive integers greater than or equal to 2.

As shown in FIG. 20, the domain name configuration apparatus 2000 includes: a transceiver module 2010 used in a first configuration gateway node included in a first network cluster, configured to receive domain name configuration information input by a user, and send the domain name configuration information to H configuration gateway nodes in the domain name configuration system; and send the domain name configuration information to K control nodes included in the first network cluster. The first network cluster is any one of the M network clusters, the first configuration gateway node is any one of the N configuration gateway nodes included in the first network cluster, H is a positive integer greater than or equal to 1 and less than or equal to N, and the K control nodes are any K control nodes in the I control nodes included in the first network cluster. The transceiver module 2010 is further used in a first control node included in the first network cluster, and is configured to send the domain name configuration information to X configuration publishing nodes. The first control node is any one of the K control nodes, and the X configuration publishing nodes are any X configuration publishing nodes in the J configuration publishing nodes included in the first network cluster. The transceiver module 2010 is further used in the first control node included in the first network cluster, and is configured to send the domain name configuration information to an authoritative server corresponding to the first configuration publishing node. The first configuration publishing node is any one of the X configuration publishing nodes. The first authoritative server receives the domain name configuration information, and performs domain name configuration based on a correspondence between a domain name and an IP address, where the domain name configuration information includes the correspondence between a domain name and an IP address.

In a possible case, before the transceiver module 2010 sends the domain name configuration information to any one of other configuration gateway nodes included in the domain name configuration system, when the first configuration gateway node is faulty, the transceiver module 2010 is further used in a second configuration gateway node, and is configured to receive the domain name configuration information input by the user, and send the domain name configuration information to K control nodes included in a network cluster in which the second configuration gateway node is located. The second configuration gateway node is any configuration gateway node other than the first configuration gateway node in the system. The K control nodes are any K control nodes in the I control nodes included in the first network cluster. The transceiver module 2010 is further used in the first control node in the first network cluster, and is configured to send the domain name configuration information to the X configuration publishing nodes. The first control node is any one of the K control nodes, and the X configuration publishing nodes are any X configuration publishing nodes in the J configuration publishing nodes included in the first network cluster. The transceiver module 2010 is further used in the first configuration publishing node in the first network cluster, and is configured to send the domain name configuration information to the authoritative server corresponding to the first configuration publishing node. The first configuration publishing node is any one of the X configuration publishing nodes. The first authoritative server receives the domain name configuration information, and performs domain name configuration based on the correspondence between a domain name and an IP address, where the domain name configuration information includes the correspondence between a domain name and an IP address.

In a possible case, the second configuration gateway node is any one of all configuration gateway nodes included in a network cluster other than the first network cluster in the system.

In a possible case, after the transceiver module 2010 used in the first configuration gateway node sends the domain name configuration information to all the other configuration gateway nodes included in the domain name configuration system, when the first configuration gateway node is faulty, the transceiver module 2010 is further used in the second configuration gateway node, and is configured to send the domain name configuration information to the K control nodes included in the network cluster in which the second configuration gateway node is located. The second configuration gateway node is any configuration gateway node other than the first configuration gateway node in the system. The K control nodes are any K control nodes in the I control nodes included in the first network cluster. The transceiver module 2010 is further used in the first control node, and is configured to send the domain name configuration information to the X configuration publishing nodes. The first control node is any one of the K control nodes, and the X configuration publishing nodes are any X configuration publishing nodes in the J configuration publishing nodes included in the first network cluster. The transceiver module 2010 is further used in the first configuration publishing node, and is configured to send the domain name configuration information to the authoritative server corresponding to the first configuration publishing node. The first configuration publishing node is any one of the X configuration publishing nodes. The first authoritative server receives the domain name configuration information, and performs domain name configuration based on the correspondence between a domain name and an IP address, where the domain name configuration information includes the correspondence between a domain name and an IP address.

In a possible case, the domain name configuration information further includes a second version number of the correspondence between a domain name and an IP address and a second applicable type of the correspondence between a domain name and an IP address. The domain name configuration apparatus further includes a storage module 2020 used in the first configuration publishing node and a processing module 2030 used in the first configuration publishing node. The storage module 2020 is configured to store historical domain name configuration information, where the historical domain name information includes a first version number and a first applicable type. The processing module 2030 is configured to compare whether the first applicable type matches the second applicable type, and when the first applicable type matches the second applicable type, the processing module 2030 is used in the first configuration publishing node, and is configured to determine whether the second version number is an update compared with the first version number. When the second version number is an update, the transceiver module 2010 is used in the first configuration publishing node, and is configured to receive the domain name configuration information.

In a possible case, each network cluster further includes W health detection nodes, where W is a positive integer greater than or equal to 2. The correspondence between a domain name and an IP address is as follows: One domain name corresponds to one target address set, and the target address set includes one or more IP addresses. The transceiver module 2010 is further configured to send the domain name configuration information to the W health detection nodes included in the first network cluster. The processing module 2030 is further used in a first health detection node included in the first network cluster, and is configured to parse the domain name configuration information to obtain a communication status of the one or more IP addresses included in the target address set. The transceiver module 2010 is further configured to send the communication status of the one or more IP addresses to the first control node. The transceiver module 2010 is further used in the first control node, and is configured to send the domain name configuration information to the X configuration publishing nodes. The transceiver module 2010 is further used in the first configuration publishing node, and is configured to send the domain name configuration information to the first authoritative server corresponding to the first configuration publishing node. When the first authoritative server receives a request that is for resolving the domain name and that is sent by a client, the first authoritative server obtains, based on the communication status of the one or more IP addresses corresponding to the domain name, one or more IP addresses whose communication status meets a condition, and sends, to the client, the one or more IP addresses whose communication status meets the condition.

In a possible case, M×N configuration gateway nodes included in the domain name configuration system are located in a first network, the N configuration gateway nodes, the I control nodes, the J configuration publishing nodes, and the W health detection nodes included in each network cluster are all located in a second network, and network environments of the first network and the second network are different.

In a possible case, the domain name configuration information further includes an identifier of a network cluster, where the identifier indicates a network cluster in which the domain name configuration information takes effect.

For more detailed descriptions of the transceiver module 2010, the storage module 2020, and the processing module 2030, directly refer to related descriptions in the method embodiments shown in the foregoing accompanying drawings. Details are not described herein again.

When the domain name configuration apparatus implements, by using software, the domain name configuration method shown in any one of the foregoing accompanying drawings, the domain name configuration apparatus and units thereof may also be software modules. The processor invokes the software module to implement the foregoing domain name configuration method. The processor may be a CPU, an application-specific integrated circuit (application-specific integrated circuit, ASIC), another general-purpose processor, a digital signal processor (digital signal processor, DSP), a field programmable gate array (field programmable gate array, FPGA), a programmable logic device (programmable logic device, PLD), a complex programmable logic device (complex programmable logic device, CPLD), a generic array logic (generic array logic, GAL), or any combination thereof.

For more detailed descriptions of the domain name configuration apparatus, refer to related descriptions in embodiments shown in the accompanying drawings. Details are not described herein again. It may be understood that the domain name configuration apparatus shown in the foregoing accompanying drawings is merely an example provided in this embodiment. According to different first objects included in the first image, the domain name configuration apparatus may include more or fewer modules. This is not limited in this application.

When the domain name configuration apparatus is implemented by using hardware, the hardware may be implemented by using a processor or a chip. The chip includes an interface circuit and a control circuit. The interface circuit is configured to receive data from a device other than the processor and perform transmission of the data to the control circuit, or send data from the control circuit to a device other than the processor.

The control circuit is configured to implement, through a logic circuit or by executing code instructions, the method in any one of the possible implementations of the foregoing embodiments. For beneficial effect, refer to descriptions of any aspect of foregoing embodiments. Details are not described herein again.

Alternatively, the chip includes a processor and a power supply circuit, where the power supply circuit is configured to supply power to the processor, and the processor may be configured to implement the domain name configuration method in the foregoing embodiment. For example, the power supply circuit may be located in a same chip as the processor, or may be located in a chip other than a chip in which the processor is located. The power supply circuit may include but is not limited to at least one of the following: a power supply sub-system, a power management chip, a power consumption management processor, a power consumption management control circuit, or the like.

Alternatively, when the domain name configuration apparatus implements any domain name configuration shown in any one of the foregoing accompanying drawings by using hardware, the hardware may be a computing device. FIG. 21 is a diagram of a structure of a computing device according to this application. As shown in FIG. 21, a computing device 2100 includes a processor 2110 and a communication interface 2120. The processor 2110 and the communication interface 2120 are coupled to each other. It may be understood that the communication interface 2120 may be a transceiver or an input/output interface. Optionally, the computing device 2100 may further include a memory 2130, configured to store instructions executed by the processor 2110, store input data needed for running instructions by the processor 2110, or store data generated after the processor 2110 runs the instructions.

When the computing device 2100 is configured to implement embodiments shown in FIG. 3 to FIG. 19, the processor 2110, the communication interface 2120, and the memory 2130 may further collaboratively implement each operation step in an information configuration process performed by each node in the network cluster.

A specific connection medium among the communication interface 2120, the processor 2110, and the memory 2130 is not limited in this embodiment of this application. In this embodiment of this application, in FIG. 21, the communication interface 2120, the processor 2110, and the memory 2130 are connected through a bus 2140. The bus is represented by a bold line in FIG. 21. A connection manner between other components is merely an example for description, and is not limited thereto. The bus may be classified into an address bus, a data bus, a control bus, and the like. For ease of representation, only one bold line is used to represent the bus in FIG. 21, but this does not indicate that there is only one bus or only one type of bus.

The memory 2130 may be configured to store a software program and a module, for example, program instructions/a module corresponding to the information configuration method provided in embodiments of this application. The processor 2110 executes the software program and the module stored in the memory 2130, to perform various function applications and data processing. The communication interface 2120 is configured to perform signaling or data communication with another device. In this application, the computing device 2100 may have a plurality of communication interfaces 2120.

In a possible example, the memory 2130 may be, but is not limited to, a volatile memory or a non-volatile memory, or may include both a volatile memory and a non-volatile memory. The non-volatile memory may be a ROM, a PROM, an EPROM, an EEPROM, or a flash memory. The volatile memory may be a RAM, and is used as an external cache. By way of example, but not limitation, many forms of RAMs are available, such as an SRAM, a DRAM, a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It can be understood that the processor in embodiments of this application may be a CPU, or may be another general-purpose processor, a DSP, an ASIC, an FPGA, or another programmable logic device, a transistor logic device, a hardware component, or any combination thereof. The general-purpose processor may be a microprocessor or any regular processor or the like.

It should be understood that the computing device 2100 according to this embodiment of this application may correspond to various nodes included in the domain name configuration system in this embodiment of this application, and the foregoing and other operations and/or functions of the modules in the computing device 2100 are respectively corresponding procedures performed by the various nodes included in the domain name configuration system. For brevity, details are not described herein again.

An embodiment of this application further provides a computing device cluster. FIG. 22 is a diagram of a structure of a computing device cluster according to an embodiment of this application. As shown in FIG. 22, the computing device cluster includes at least one computing device. The computing device may be a server, for example, a central server, an edge server, or a local server in a local data center. In some embodiments, the computing device may alternatively be a terminal device like a desktop computer, a notebook computer, or a smartphone.

As shown in FIG. 22, the computing device cluster includes at least one computing device 2100. A memory 2130 in the one or more computing devices 2100 in the computing device cluster may store same instructions used for a domain name configuration method.

In some possible implementations, the memories 2130 of the one or more computing devices 2100 in the computing device cluster may alternatively separately store a part of instructions used for domain name configuration. In other words, a combination of instructions stored in one or more computing devices 2100 may be jointly used to complete domain name configuration.

It should be noted that memories 2130 in different computing devices 2100 in the computing device cluster may store different instructions, and the different instructions are separately used to perform some functions of the domain name configuration apparatus. In other words, instructions stored in the memory 2130 in different computing devices 2100 may implement functions of one or more modules of the transceiver module, the processing module, and the storage module.

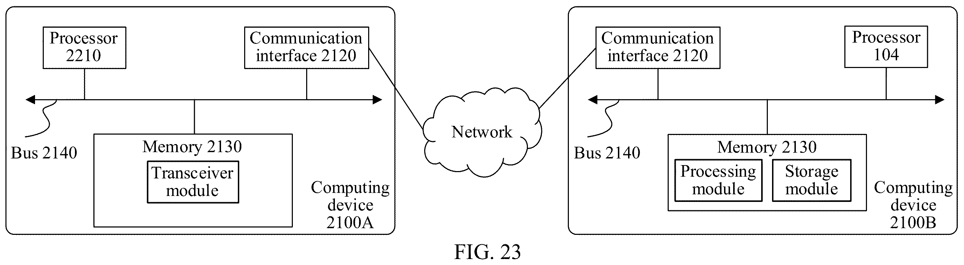

In some possible implementations, the one or more computing devices in the computing device cluster may be connected through a network. The network may be a wide area network, a local area network, or the like. FIG. 23 shows a possible implementation. FIG. 23 is a diagram of a possible connection manner of a computing device cluster according to this application. As shown in FIG. 23, two computing devices 2100A and 2200B are connected through a network. Specifically, each computing device is connected to the network through a communication interface in the computing device. In this type of possible implementation, a memory 2130 in the computing device 2100A stores instructions used for performing a function of the transceiver module. In addition, a memory 2130 in the computing device 2100B stores instructions for performing functions of the processing module and the storage module.

A connection manner between computing device clusters shown in FIG. 23 may be that a requirement of the domain name configuration system provided in this application (for example, a large amount of data is sent and received) is considered. Therefore, it is considered that functions implemented by the transceiver module are performed by the computing device 2100A.

It should be understood that functions of the computing device 2100A shown in FIG. 23 may alternatively be completed by a plurality of computing devices 2100. Similarly, functions of the computing device 2100B may alternatively be completed by a plurality of computing devices 2100.

An embodiment of this application further provides another computing device cluster. For a connection relationship between computing devices in the computing device cluster, refer to the connection manners of the computing device cluster in FIG. 22 and FIG. 23 similarly. A difference lies in that the memory 2130 in one or more computing devices 2100 in the computing device cluster may store a same instruction used to implement the domain name configuration method.

In some possible implementations, the memories 2130 of the one or more computing devices 2100 in the computing device cluster may alternatively separately store a part of instructions used to implement the domain name configuration method. In other words, a combination of one or more computing devices 2100 may jointly execute instructions for implementing the domain name configuration method.

It should be noted that memories 2130 in different computing devices 2100 in the computing device cluster may store different instructions, and the different instructions are used to perform some functions of the domain name configuration method. In other words, instructions stored in the memories 2130 in different computing devices 2100 may implement functions of one or more nodes of the configuration gateway node, the control node, and the configuration publishing node.

An embodiment of this application further provides a computer program product including instructions. The computer program product may be software or a program product that includes the instructions and that can run on a computing device or can be stored in any usable medium. When the computer program product runs on at least one computing device, the at least one computing device is caused to perform a domain name configuration method.

Embodiments of this application further provide a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. The instructions indicate a computing device to perform a domain name configuration method.

The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A domain name configuration system, wherein the system comprises M network clusters, and each network cluster comprises N configuration gateway nodes, I control nodes, J configuration publishing nodes, and L authoritative servers, wherein M, N, I, J, and L are all positive integers greater than or equal to 2;
a first configuration gateway node comprised in a first network cluster receives domain name configuration information input by a user, and sends the domain name configuration information to H configuration gateway nodes comprised in the system, wherein
the first network cluster is any one of the M network clusters, the first configuration gateway node is any one of the N configuration gateway nodes comprised in the first network cluster, and H is a positive integer greater than or equal to 1 and less than or equal to N;
the first configuration gateway node further sends the domain name configuration information to K control nodes comprised in the first network cluster, wherein
the K control nodes are any K control nodes in the I control nodes comprised in the first network cluster;
a first control node comprised in the first network cluster sends the domain name configuration information to X configuration publishing nodes, wherein
the first control node is any one of the K control nodes, and the X configuration publishing nodes are any X configuration publishing nodes in the J configuration publishing nodes comprised in the first network cluster;
a first configuration publishing node comprised in the first network cluster sends the domain name configuration information to an authoritative server corresponding to the first configuration publishing node, wherein
the first configuration publishing node is any one of the X configuration publishing nodes; and
a first authoritative server receives the domain name configuration information, and performs domain name configuration based on a correspondence between a domain name and an IP address, wherein the domain name configuration information comprises the correspondence between a domain name and an IP address.

2. The system according to claim 1, wherein before the first configuration gateway node sends the domain name configuration information to any one of other configuration gateway nodes comprised in the system, when the first configuration gateway node is faulty,
a second configuration gateway node receives the domain name configuration information input by the user, wherein the second configuration gateway node is any configuration gateway node other than the first configuration gateway node in the system;
the second configuration gateway node further sends the domain name configuration information to K control nodes comprised in a network cluster in which the second configuration gateway node is located, wherein
the K control nodes are any K control nodes in the I control nodes comprised in the first network cluster;
the first control node comprised in the first network cluster sends the domain name configuration information to the X configuration publishing nodes, wherein
the first control node is any one of the K control nodes, and the X configuration publishing nodes are any X configuration publishing nodes in the J configuration publishing nodes comprised in the first network cluster;
the first configuration publishing node comprised in the first network cluster sends the domain name configuration information to the authoritative server corresponding to the first configuration publishing node, wherein
the first configuration publishing node is any one of the X configuration publishing nodes; and
the first authoritative server receives the domain name configuration information, and performs domain name configuration based on the correspondence between a domain name and an IP address, wherein the domain name configuration information comprises the correspondence between a domain name and an IP address.

3. The system according to claim 2, wherein the second configuration gateway node is any one of all configuration gateway nodes comprised in a network cluster other than the first network cluster in the system.

4. The system according to any one of claims 1 to 3, wherein after the first configuration gateway node sends the domain name configuration information to all the other configuration gateway nodes comprised in the system, when the first configuration gateway node is faulty,
the second configuration gateway node further sends the domain name configuration information to the K control nodes comprised in the network cluster in which the second configuration gateway node is located, wherein
the second configuration gateway node is any configuration gateway node other than the first configuration gateway node in the system, and the K control nodes are any K control nodes in the I control nodes comprised in the first network cluster;
the first control node comprised in the first network cluster sends the domain name configuration information to the X configuration publishing nodes, wherein
the first control node is any one of the K control nodes, and the X configuration publishing nodes are any X configuration publishing nodes in the J configuration publishing nodes comprised in the first network cluster;
the first configuration publishing node comprised in the first network cluster sends the domain name configuration information to the authoritative server corresponding to the first configuration publishing node, wherein
the first configuration publishing node is any one of the X configuration publishing nodes; and
the first authoritative server receives the domain name configuration information, and performs domain name configuration based on the correspondence between a domain name and an IP address, wherein the domain name configuration information comprises the correspondence between a domain name and an IP address.

5. The system according to any one of claims 1 to 4, wherein the domain name configuration information further comprises a second version number of the correspondence between a domain name and an IP address and a second applicable type of the correspondence between a domain name and an IP address;
the first configuration publishing node stores historical domain name configuration information, wherein the historical domain name configuration information comprises a first version number and a first applicable type; and
that the first configuration publishing node comprised in the first network cluster receives the domain name configuration information sent by the first control node comprises:
comparing, by the first configuration publishing node, whether the first applicable type matches the second applicable type;
when the first applicable type matches the second applicable type, determining, by the first configuration publishing node, whether the second version number is an update compared with the first version number; and
when the second version number is an update, receiving, by the first configuration publishing node, the domain name configuration information.

6. The system according to any one of claims 1 to 5, wherein each network cluster further comprises W health detection nodes, W is a positive integer greater than or equal to 2, the correspondence between a domain name and an IP address is that one domain name corresponds to one target address set, and the target address set comprises one or more IP addresses;
the first configuration gateway node further sends the domain name configuration information to the W health detection nodes comprised in the first network cluster;
a first health detection node comprised in the first network cluster resolves the domain name configuration information to obtain a communication status of the one or more IP addresses comprised in the target address set, and sends the communication status of the one or more IP addresses to the first control node;
the first control node sends the domain name configuration information to the X configuration publishing nodes;
the first configuration publishing node sends the domain name configuration information to the first authoritative server corresponding to the first configuration publishing node; and
when the first authoritative server receives a request that is for resolving the domain name and that is sent by a client, the first authoritative server obtains, based on the communication status of the one or more IP addresses corresponding to the domain name, one or more IP addresses whose communication status meets a condition, and sends, to the client, the one or more IP addresses whose communication status meets the condition.

7. The system according to any one of claims 1 to 6, wherein M×N configuration gateway nodes comprised in the system are located in a first network, the N configuration gateway nodes, the I control nodes, the J configuration publishing nodes, and the W health detection nodes comprised in each network cluster are all located in a second network, and the first network and the second network have different network environments.

8. The system according to any one of claims 1 to 7, wherein the domain name configuration information further comprises an identifier of a network cluster, and the identifier indicates a network cluster in which the domain name configuration information takes effect.

9. A domain name configuration method, wherein the method is performed by a domain name configuration system, the domain name configuration system comprises M network clusters, and each network cluster comprises N configuration gateway nodes, I control nodes, J configuration publishing nodes, and L authoritative servers, wherein M, N, I, J, and L are all positive integers greater than or equal to 2; and
the method comprises:
receiving, by a first configuration gateway node comprised in a first network cluster, domain name configuration information input by a user, and sending the domain name configuration information to H configuration gateway nodes comprised in the system, wherein
the first network cluster is any one of the M network clusters, the first configuration gateway node is any one of the N configuration gateway nodes comprised in the first network cluster, and H is a positive integer greater than or equal to 1 and less than or equal to N;
further sending, by the first configuration gateway node, the domain name configuration information to K control nodes comprised in the first network cluster, wherein
the K control nodes are any K control nodes in the I control nodes comprised in the first network cluster;
sending, by a first control node comprised in the first network cluster, the domain name configuration information to X configuration publishing nodes, wherein
the first control node is any one of the K control nodes, and the X configuration publishing nodes are any X configuration publishing nodes in the J configuration publishing nodes comprised in the first network cluster;
sending, by a first configuration publishing node comprised in the first network cluster, the domain name configuration information to an authoritative server corresponding to the first configuration publishing node, wherein
the first configuration publishing node is any one of the X configuration publishing nodes; and
receiving, by a first authoritative server, the domain name configuration information, and performing domain name configuration based on a correspondence between a domain name and an IP address, wherein the domain name configuration information comprises the correspondence between a domain name and an IP address.

10. The method according to claim 9, wherein before sending, by the first configuration gateway node, the domain name configuration information to any one of other configuration gateway nodes comprised in the system, the method further comprises:
when the first configuration gateway node is faulty, receiving, by a second configuration gateway node, the domain name configuration information input by the user, wherein the second configuration gateway node is any configuration gateway node other than the first configuration gateway node in the system;
further sending, by the second configuration gateway node, the domain name configuration information to K control nodes comprised in a network cluster in which the second configuration gateway node is located, wherein
the K control nodes are any K control nodes in the I control nodes comprised in the first network cluster;
sending, by the first control node comprised in the first network cluster, the domain name configuration information to the X configuration publishing nodes, wherein
the first control node is any one of the K control nodes, and the X configuration publishing nodes are any X configuration publishing nodes in the J configuration publishing nodes comprised in the first network cluster;
sending, by the first configuration publishing node comprised in the first network cluster, the domain name configuration information to the authoritative server corresponding to the first configuration publishing node, wherein
the first configuration publishing node is any one of the X configuration publishing nodes; and
receiving, by the first authoritative server, the domain name configuration information, and performing domain name configuration based on the correspondence between a domain name and an IP address, wherein the domain name configuration information comprises the correspondence between a domain name and an IP address.

11. The method according to claim 10, wherein the second configuration gateway node is any one of all configuration gateway nodes comprised in a network cluster other than the first network cluster in the system.

12. The method according to any one of claims 9 to 11, wherein after sending, by the first configuration gateway node, the domain name configuration information to all the other configuration gateway nodes comprised in the system,
the method further comprises:
when the first configuration gateway node is faulty, further sending, by the second configuration gateway node, the domain name configuration information to the K control nodes comprised in the network cluster in which the second configuration gateway node is located, wherein
the second configuration gateway node is any configuration gateway node other than the first configuration gateway node in the system, and the K control nodes are any K control nodes in the I control nodes comprised in the first network cluster;
sending, by the first control node comprised in the first network cluster, the domain name configuration information to the X configuration publishing nodes, wherein
the first control node is any one of the K control nodes, and the X configuration publishing nodes are any X configuration publishing nodes in the J configuration publishing nodes comprised in the first network cluster;
sending, by the first configuration publishing node comprised in the first network cluster, the domain name configuration information to the authoritative server corresponding to the first configuration publishing node, wherein
the first configuration publishing node is any one of the X configuration publishing nodes; and
receiving, by the first authoritative server, the domain name configuration information, and performing domain name configuration based on the correspondence between a domain name and an IP address, wherein the domain name configuration information comprises the correspondence between a domain name and an IP address.

13. The method according to any one of claims 9 to 12, wherein the domain name configuration information further comprises a second version number of the correspondence between a domain name and an IP address and a second applicable type of the correspondence between a domain name and an IP address; and
the first configuration publishing node stores historical domain name configuration information, wherein the historical domain name configuration information comprises a first version number and a first applicable type; and the method further comprises:
comparing, by the first configuration publishing node, whether the first applicable type matches the second applicable type;
when the first applicable type matches the second applicable type, determining, by the first configuration publishing node, whether the second version number is an update compared with the first version number; and
when the second version number is an update, receiving, by the first configuration publishing node, the domain name configuration information.

14. The method according to any one of claims 9 to 13, wherein each network cluster further comprises W health detection nodes, W is a positive integer greater than or equal to 2, the correspondence between a domain name and an IP address is that one domain name corresponds to one target address set, and the target address set comprises one or more IP addresses; and the method further comprises:
further sending, by the first configuration gateway node, the domain name configuration information to the W health detection nodes comprised in the first network cluster;
resolving, by a first health detection node comprised in the first network cluster, the domain name configuration information to obtain a communication status of the one or more IP addresses comprised in the target address set, and sending the communication status of the one or more IP addresses to the first control node;
sending, by the first control node, the domain name configuration information to the X configuration publishing nodes;
sending, by the first configuration publishing node, the domain name configuration information to the first authoritative server corresponding to the first configuration publishing node; and
when the first authoritative server receives a request that is for resolving the domain name and that is sent by a client, obtaining, by the first authoritative server based on the communication status of the one or more IP addresses corresponding to the domain name, one or more IP addresses whose communication status meets a condition, and sending, to the client, the one or more IP addresses whose communication status meets the condition.

15. The method according to any one of claims 9 to 14, wherein M×N configuration gateway nodes comprised in the domain name configuration system are located in a first network, the N configuration gateway nodes, the I control nodes, the J configuration publishing nodes, and the W health detection nodes comprised in each network cluster are all located in a second network, and the first network and the second network have different network environments.

16. The method according to any one of claims 9 to 15, wherein the domain name configuration information further comprises an identifier of a network cluster, and the identifier indicates a network cluster in which the domain name configuration information takes effect.

17. A computing device cluster, comprising at least one computing device, wherein each computing device comprises a processor and a memory; and
the processor of the at least one computing device is configured to execute instructions stored in the memory of the at least one computing device, to cause the computing device cluster to perform the domain name configuration method according to any one of claims 9 to 16.

18. A computer-readable storage medium, comprising computer program instructions, wherein when the computer program instructions are executed by a computing device cluster, the computing device cluster performs the method according to any one of claims 9 to 16.

19. A computer program product comprising instructions, wherein when the instructions are run by a computing device cluster, the computing device cluster is caused to perform the domain name configuration method according to any one of claims 9 to 16.
